# EUROPEAN PATENT APPLICATION

(11) **EP 4 152 801 A1**
(43) Date of publication of application: **22.03.2023**
(21) Application number: 20935088.3
(22) Date of filing: 12.05.2020
(51) Int. Cl.: H04W 24/10, H04W 4/46, H04W 28/04, H04W 52/30

(54) **TERMINAL AND COMMUNICATION METHOD**

(71) Applicant: NTT DOCOMO, INC., Chiyoda-Ku Tokyo 100-6150 (JP)
(72) Inventor: YOSHIOKA, Shohei, Tokyo 100-6150 (JP); NAGATA, Satoshi, Tokyo 100-6150 (JP)
(74) Representative: Hoffmann Eitle
(86) International application number: PCT/JP2020/019032
(87) International publication number: WO 2021/229699

(57) **Abstract**

A terminal includes a control unit configured to, in a case where multiple first channels for transmission to a base station overlap with a second channel for transmission to another terminal in a time domain, determine an operation to be applied to the multiple first channels and the second channel, and a transmission unit configured to apply the operation to transmit a channel, wherein the control unit determines which of a first operation or a second channel is to be performed first, the first operation being applied to the multiple first channels and the second operation being applied to at least one of the second channel and the multiple first channels.

## Description

### TECHNICAL FIELD

The present invention relates to a terminal and a communication method in a radio communication system.

### BACKGROUND ART

In LTE (Long Term Evolution) and a successor system of the LTE (for example, LTE-A (LTE-Advanced) and NR (New Radio) (which is also referred to as 5G)), D2D (Device to Device) techniques where terminals conduct direct communication with each other without involving a base station are considered (for example, non-patent document 1) .

The D2D reduces traffic between terminals and base stations and even if the base stations are unable to perform communications in the event of, for example, disasters, the D2D enables communication between the terminals. Note that although the D2D is referred to as "sidelink" in 3GPP (3^{rd} Generation Partnership Project), the D2D is used as a more general terminology in the present specification. However, the sidelink may be used in descriptions of embodiments as stated below if necessary.

The D2D communication is broadly divided into D2D discovery for discovering other terminals capable of communication and D2D communication (also referred to as D2D direct communication, D2D communication, direct communication between terminals or the like) for direct communication between terminals. In the following, when the D2D communication, the D2D discovery, and the like, are not particularly distinguished, they are simply referred to as D2D. Also, signals transmitted and received in the D2D are referred to as D2D signals. Various use cases of services associated with V2X (Vehicle to Everything) in the NR are being discussed (for example, non-patent document 2).

### [Prior Art Document]

### [Non-Patent Document]

[Non-Patent Document 1] 3GPP TS 38.211 V16.0.0 (2019-12)
[Non-Patent Document 2] 3GPP TR 22.886 V15.1.0 (2017-03)

### SUMMARY OF INVENTION

### [PROBLEM TO BE SOLVED BY THE INVENTION]

In a case where a terminal attempts to transmit a SL (sidelink) channel as inter-terminal direct communication, a case is assumed where the SL channel overlaps with some or all of multiple UL channels for transmission to a base station at least in a time domain. For example, however, operations for an overlapping channel such as prioritization are not specified.

In the light of the above problem, the present invention aims to determine a channel for transmission in the case where a channel for inter-terminal direct communication overlaps with an uplink channel.

### [MEANS FOR SOLVING THE PROBLEM]

According to a technique disclosed herein, there is provided a terminal, comprising: a control unit configured to, in a case where multiple first channels for transmission to a base station overlap with a second channel for transmission to another terminal in a time domain, determine an operation to be applied to the multiple first channels and the second channel; and a transmission unit configured to apply the operation to transmit a channel, wherein the control unit determines which of a first operation or a second operation is to be performed first, the first operation being applied to the multiple first channels and the second operation being applied to at least one of the second channel and the multiple first channels.

### [ADVANTAGE OF THE INVENTION]

According to the disclosed technique, it is possible to determine a channel for transmission in the case where a channel for inter-terminal direct communication overlaps with an uplink channel.

### BRIEF DESCRIPTION OF DRAWINGS

FIG. 1 is a diagram illustrating V2X;
FIG. 2 is a diagram illustrating an example (1) of a transmission mode of the V2X;
FIG. 3 is a diagram illustrating an example (2) of a transmission mode of the V2X;
FIG. 4 is a diagram illustrating an example (3) of a transmission mode of the V2X;
FIG. 5 is a diagram illustrating an example (4) of a transmission mode of the V2X;
FIG. 6 is a diagram illustrating an example (5) of a transmission mode of the V2X;
FIG. 7 is a diagram illustrating an example (1) of a communication type of the V2X;
FIG. 8 is a diagram illustrating an example (2) of a communication type of the V2X;
FIG. 9 is a diagram illustrating an example (3) of a communication type of the V2X;
FIG. 10 is a sequence diagram illustrating an operation example (1) of the V2X;
FIG. 11 is a sequence diagram illustrating an operation example (2) of the V2X;
FIG. 12 is a is a sequence diagram illustrating an operation example (3) of the V2X;
FIG. 13 is a sequence diagram illustrating an operation example (4) of the V2X;
FIG. 14 is a diagram illustrating an example where an UL channel overlaps;
FIG. 15 is a diagram illustrating an example where a SL channel overlaps with an UL channel;
FIG. 16 is a diagram illustrating an example where a SL channel overlaps with multiple UL channels;
FIG. 17 is a diagram illustrating a channel group;
FIG. 18 is a flowchart illustrating an operation example (1) associated with channel overlapping according to an embodiment of the present invention;
FIG. 19 is a diagram illustrating an operation example (1) associated with channel overlapping according to an embodiment of the present invention;
FIG. 20 is a diagram illustrating an operation example (2) associated with channel overlapping according to an embodiment of the present invention;
FIG. 21 is a diagram illustrating an operation example (2) associated with channel overlapping according to an embodiment of the present invention;
FIG. 22 is a diagram illustrating an operation example (3) associated with channel overlapping according to an embodiment of the present invention;
FIG. 23 is a diagram illustrating an operation example (3-1) associated with channel overlapping according to an embodiment of the present invention;
FIG. 24 is a diagram illustrating an operation example (3-2) associated with channel overlapping according to an embodiment of the present invention;
FIG. 25 is a diagram illustrating one functional arrangement example of a base station 10 according to an embodiment of the present invention;
FIG. 26 is a diagram illustrating one functional arrangement example of a terminal 20 according to an embodiment of the present invention; and
FIG. 27 is a diagram illustrating one hardware arrangement example of the base station 10 or the terminal 20 according to an embodiment of the present invention.

### EMBODIMENTS OF THE INVENTION

Hereinafter, embodiments of the present invention will be described with reference to the drawings. The embodiments described below are merely examples, and embodiments to which the present invention is applied are not limited to the following embodiments.

In operations of a radio communication system of an embodiment of the present invention, conventional techniques are used as needed. Note that the conventional techniques are conventional LTE, for example, but are not limited to the conventional LTE. Also, unless specifically stated otherwise, it should be appreciated that the terminology "LTE" used herein has a broader meaning including LTE-Advanced, its subsequent schemes (e.g. , NR) or a wireless LAN (Local Area Network).

Also, in embodiments of the present invention, a duplex scheme may be TDD (Time Division Duplex) scheme, FDD (Frequency Division Duplex) scheme or other schemes (e.g., flexible duplex scheme or the like).

Also, in embodiments of the present invention, "configuring" a radio parameter or the like may mean that a predetermined value is pre-configured, that a radio parameter indicated by the base station 10 or the terminal 20 is configured or that it is specified by the technical specification.

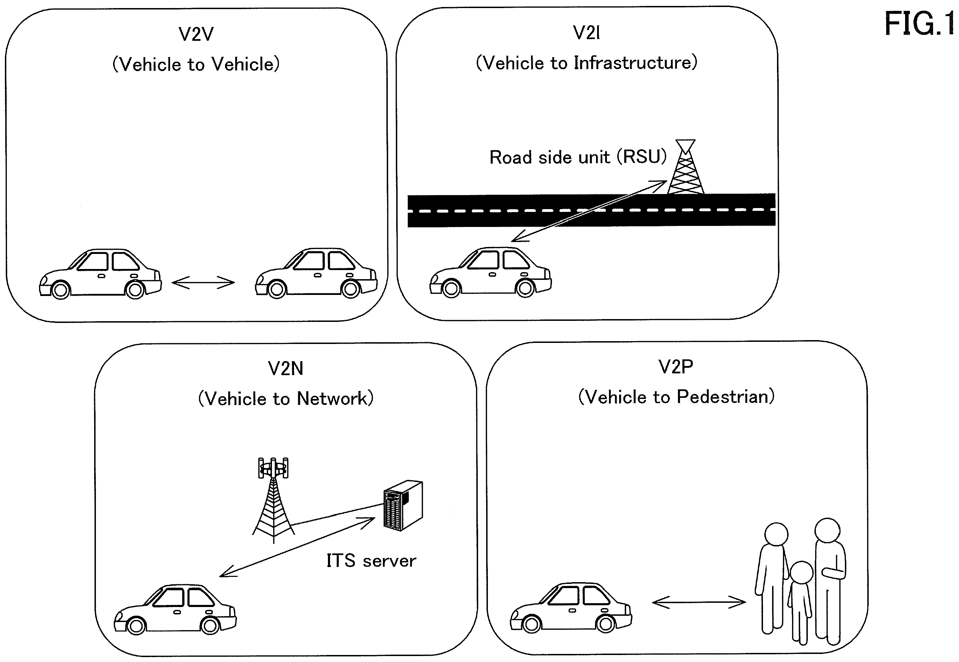

FIG. 1 is a diagram illustrating V2X. In 3GPP, it is being discussed that V2X (Vehicle to Everything) or eV2X (enhanced V2X) will be implemented through enhancement of D2D functions, and the technical specifications are being developed. As illustrated in FIG. 1, the V2X is a part of ITS (Intelligent Transport Systems) and is a collective term for: V2V (Vehicle to Vehicle), which means the form of communication between vehicles; V2I (Vehicle to Infrastructure), which means the form of communication between a vehicle and a RSU (Road-Side Unit) located at a roadside; V2N (Vehicle to Network), which means the form of communication between a vehicle and an ITS server; and V2P (Vehicle to Pedestrian), which means the form of communication between a vehicle and a mobile terminal carried by a pedestrian.

Also, V2X utilizing cellular communication and inter-terminal communication of LTE or NR is being discussed in the 3GPP. The V2X utilizing cellular communication may be referred to as cellular V2X. In the V2X of the NR, implementations of large capacity, low delay, high reliability and QoS (Quality of Service) control are being discussed.

It is expected that, regarding the V2X of LTE or NR, discussions will be not limited to the 3GPP specifications in the future. For example, it is expected that interoperability, cost reduction by implementation of an upper layer, combination or switching methods of multiple RATs (Radio Access Technology), regulatory compliance in respective countries, data acquisition, distribution, database management and use of V2X platforms of LTE or NR will be discussed.

In embodiments of the present invention, implementations of a communication device equipped to a vehicle are mainly assumed, the embodiments of the present invention are not limited to those embodiments. For example, the communication device may be a terminal carried by a person, a device equipped to a drone or an aircraft, a base station, an RSU, a relay node, a terminal having scheduling capabilities and so on.

Note that a SL (Sidelink) may be differentiated from an UL (Uplink) or a DL (Downlink), based on any of or combinations of 1) to 4) below. Also, the SL may be referred to as other names.
1) Resource arrangement in the time domain
2) Resource arrangement in the frequency domain
3) Synchronization signal that is referred to (including SLSS (Sidelink Synchronization Signal))
4) Reference signal for use in pathloss measurement for transmission power control

Also, regarding OFDM (Orthogonal Frequency Division Multiplexing) of the SL or the UL, any of CP-OFDM (Cyclic-Prefix OFDM), DFT-S-OFDM (Discrete Fourier Transform-Spread-OFDM), OFDM without transform precoding or OFDM with transform precoding may be applied.

In the SL of the LTE, Mode 3 and Mode 4 regarding SL resource allocation to a terminal 20 are defined. In Mode 3, transmission resources are dynamically allocated by DCI (Downlink Control Information) transmitted from a base station 10 to the terminal 20. Also, SPS (Semi Persistent Scheduling) is also enabled in Mode 3. In Mode 4, the terminal 20 autonomously selects transmission resources from a resource pool.

Note that a slot according to an embodiment of the present invention may be replaced with a symbol, a mini-slot, a subframe, a radio frame or a TTI (Transmission Time Interval). Also, a cell according to an embodiment of the present invention may be replaced with a cell group, a carrier component, a BWP, a resource pool, a resource, a RAT (Radio Access Technology), a system (including a wireless LAN) or the like.

Note that in embodiments of the present invention, the terminal 20 is not limited to a V2X terminal may be any type of terminal that performs D2D communication. For example, the terminal 20 may be a terminal possessed by a user such as a smartphone or an IoT (Internet of Things) device such as a smart meter.

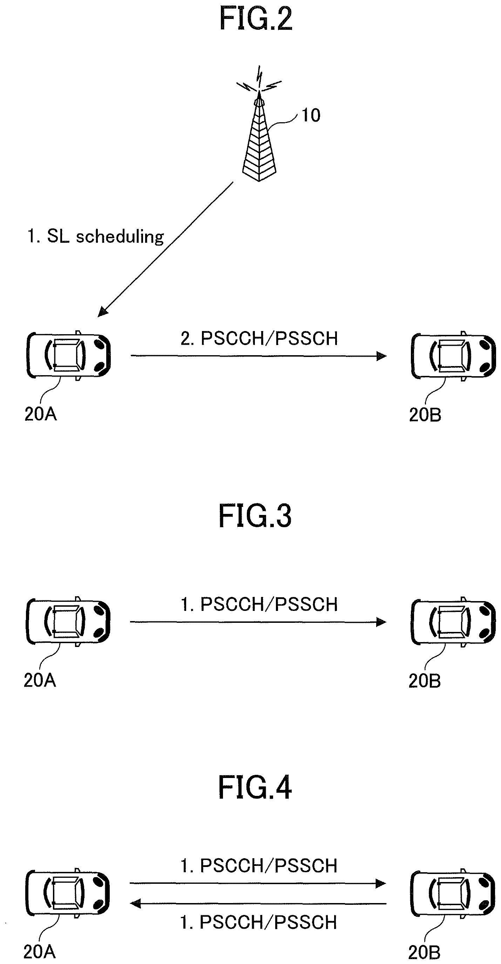

FIG. 2 is a diagram illustrating an example (1) of a transmission mode for the V2X. In the transmission mode for sidelink communication illustrated in FIG. 2, at step 1, the base station 10 transmits a scheduling for a sidelink to the terminal 20A. Then, the terminal 20A transmits a PSCCH (Physical Sidelink Control Channel) and a PSSCH (Physical Sidelink Shared Channel) to the terminal 20B based on the received scheduling (step 2). The transmission mode of the sidelink communication illustrated in FIG. 2 may be referred to as sidelink transmission mode 3 for the LTE. In the sidelink transmission mode 3 for the LTE, Uu based sidelink scheduling is performed. The Uu means a radio interface between a UTRAN (Universal Terrestrial Radio Access Network) and a UE (User Equipment). Note that the transmission mode for the sidelink communication illustrated in FIG. 2 may be referred to as sidelink transmission mode 1 for the NR.

FIG. 3 is a diagram illustrating an example (2) of a transmission mode for the V2X. In the transmission mode for the sidelink communication illustrated in FIG. 3, at step 1, the terminal 20A uses an autonomously selected resource to transmit a PSCCH and a PSSCH to the terminal 20B. The transmission mode for the sidelink communication illustrated in FIG. 3 may be referred to as sidelink transmission mode 4 for the LTE. In sidelink transmission mode 4 for the LTE, the UE itself perform resource selection.

FIG. 4 is a diagram illustrating an example (3) of a transmission mode for the V2X. In a transmission mode for the sidelink communication illustrated in FIG. 4, at step 1, the terminal 20A uses an autonomously selected resource to transmit a PSCCH and a PSSCH to the terminal 20B. Analogously, the terminal 20B uses an autonomously selected resource to transmit a PSCCH and a PSSCH to the terminal 20A (step 1). The transmission mode for the sidelink communication illustrated in FIG. 4 may be referred to as sidelink transmission mode 2a for the NR. In the sidelink transmission mode 2 for the NR, the terminal 20 itself performs resource selection. In the NR, the mode where the terminal 20 selects a resource for sidelink transmission may be referred to as resource allocation (RA) mode 2.

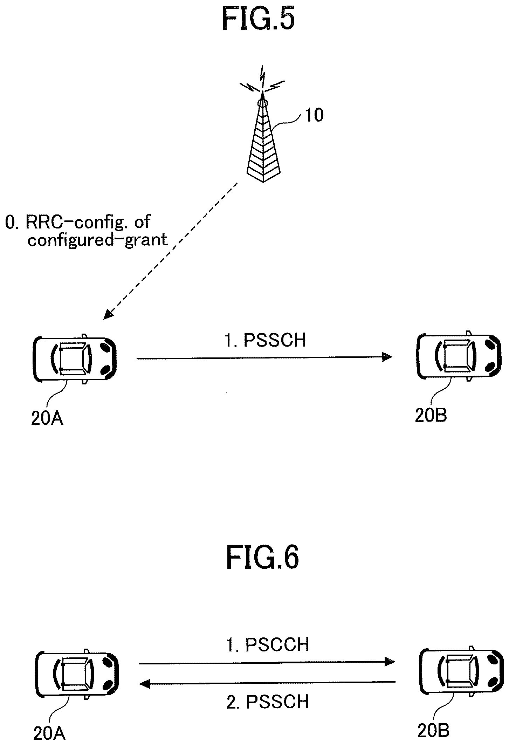

FIG. 5 is a diagram for illustrating example (4) of a transmission mode for the V2X. In the transmission mode for the sidelink communication illustrated in FIG. 5, at step 0, the base station 10 transmits a sidelink grant to the terminal 20A via an RRC (Radio Resource Control) configuration. Then, the terminal 20A transmits a PSSCH to the terminal 20B via received resource pattern (step 1) . The transmission mode for the sidelink communication illustrated in FIG. 5 may be referred to as sidelink transmission mode 2c for the NR.

FIG. 6 is a diagram illustrating an example (5) of a transmission mode for the V2X. In a transmission mode for the sidelink communication illustrated in FIG. 6, at step 1, the terminal 20A transmits a sidelink scheduling to the terminal 20B via a PSCCH. Then, the terminal 20B transmits a PSSCH to the terminal 20A based on the received scheduling (step 2). The transmission mode for the sidelink communication illustrated in FIG. 6 may be referred to as sidelink transmission mode 2d for the NR. In the NR, the mode where the base station 10 allocates a resource to the terminal 20 for sidelink transmission may be referred to as resource allocation (RA) mode 1.

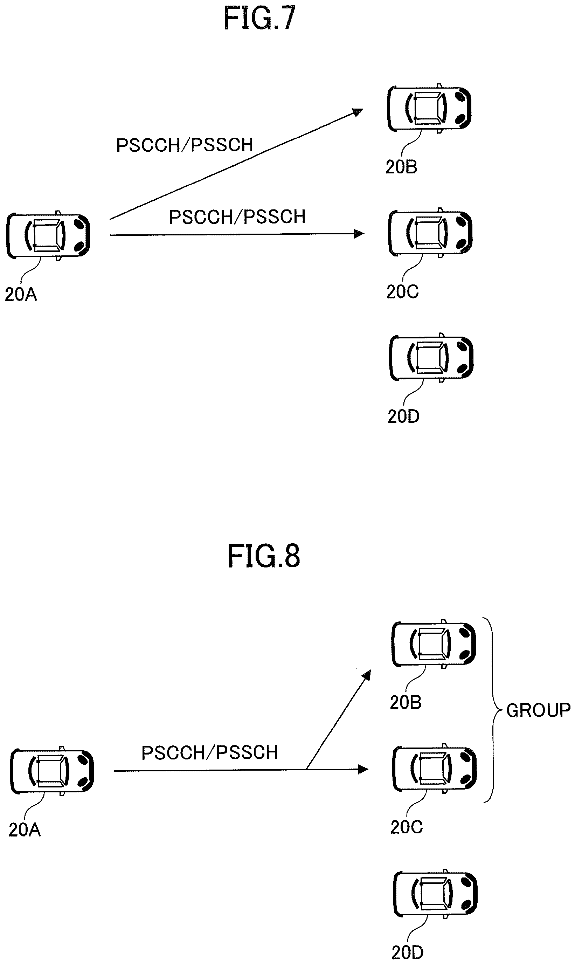

FIG. 7 is a diagram illustrating an example (1) of a communication type of the V2X. The sidelink communication type illustrated in FIG. 7 is a unicast. The terminal 20A transmits a PSCCH and a PSSCH to the terminal 20. In the example illustrated in FIG. 7, the terminal 20A performs unicast for the terminal 20B and also performs a unicast for the terminal 20C.

FIG. 8 is a diagram illustrating an example (2) of a communication type for the V2X. The sidelink communication type illustrated in FIG. 8 is a group cast. The terminal 20A transmits a PSCCH and a PSSCH to a group to which one or more terminals 20 belong. In the example illustrated in FIG. 8, the group includes the terminals 20B and 20C, and the terminal 20A performs a group cast to the group.

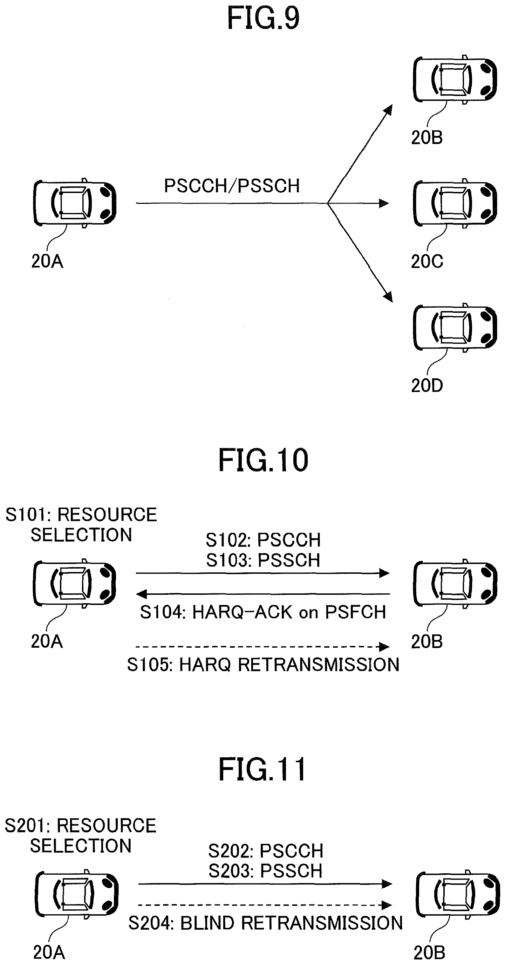

FIG. 9 is a diagram illustrating an example (3) of a communication type for the V2X. The sidelink communication type illustrated in FIG. 9 is a broadcast. The terminal 20A transmits a PSCCH and a PSSCH to one or more terminals 20. In the example illustrated in FIG. 9, the terminal 20A performs a broadcast to the terminals 20B, 20C and 20D. Note that the terminal 20A illustrated in FIGS. 7 to 9 may be referred to as a header UE.

Also, it is assumed in NR-V2X that a HARQ (Hybrid Automatic Repeat Request) is supported for the sidelink unicast and group cast. In addition, SFCI (Sidelink Feedback Control Information) including a HARQ response is defined in the NR-V2X. In addition, it is being discussed that the SFCI is transmitted via a PSFCH (Physical Sidelink Feedback Channel).

Although the PSFCH is used for sidelink transmission of a HARQ-ACK in descriptions below, it is merely an example. For example, a PSCCH may be used to transmit the sidelink HARQ-ACK, a PSSCH may be used to transmit the sidelink HARQ-ACK or other channels may be used to transmit the sidelink HARQ-ACK.

In the following, in general, information reported by the terminal 20 in HARQs is referred to as the HARQ-ACK for convenience. The HARQ-ACK may be referred to as HARQ-ACK information. Also, more specifically, a codebook applied to the HARQ-ACK information reported from the terminal 20 to the base station 10 or the like is referred to as a HARQ-ACK codebook. The HARQ-ACK codebook specifies bit sequences of the HARQ-ACK information. Note that not only a NACK but also the ACK is transmitted in the HARQ-ACK.

FIG. 10 is a sequence diagram illustrating a V2X operation example (1). As illustrated in FIG. 10, the radio communication system according to an embodiment of the present invention may have terminals 20A and 20B. Note that although a large number of user equipments are actually present, the terminals 20A and 20B are exemplarily illustrated in FIG. 10.

In the following, if the terminals 20A, 20B and so on are not particularly distinguished, they are simply described as "terminal 20" or "user equipment". Although the case where both the terminals 20A and 20B are within a coverage of a cell is illustrated in FIG. 10, the operation according to an embodiment of the present invention may be also applied to the case where the terminal 20B is out of the coverage.

As stated above, in the present embodiment, the terminal 20 is a device installed on a vehicle such as a car, for example, and has cellular communication functions and sidelink functions as a UE in the LTE or the NR. The terminal 20 may be a typical mobile terminal (such as a smartphone) . Also, the terminal 20 may be a RSU. The RSU may be a UE-type RSU having UE functions or a gNB-type RSU having functions of a base station apparatus.

Note that the terminal 20 is not necessarily a device of a single housing and even if various sensors are distributed and installed in a vehicle, for example, the device including these sensors may be the terminal 20.

Also, processing contents at the terminal 20 for sidelink transmission data are basically similar to those of UL transmission for the LTE or the NR. For example, the terminal 20 scrambles and modulates a codeword of transmission data to generate complex-valued symbols and maps the complex-valued symbols (transmission signal) to one or two layers for precoding. Then, the terminal 20 maps the precoded complex-valued symbols to a resource element to generate a transmission signal (for example, a complex-valued time-domain SC-FDMA signal) and transmits it from each antenna port.

Note that the base station 10 has cellular communication functions to serve as a base station for the LTE or the NR and functions that enable communications of the terminal 20 according to the present embodiment (for example, resource pool configuration, resource allocation or the like). Also, the base station 10 may be an RSU (a gNB-type RSU).

Also, a signal waveform utilized by the terminal 20 in the SL or the UL in the radio communication system according to an embodiment of the present invention may be OFDMA, SC-FDMA or others.

At step S101, the terminal 20A autonomously selects a resource used for a PSCCH and a PSSCH from a resource selection window having a predetermined period. The resource selection window may be configured to the terminal 20 by the base station 10.

At steps S102 and S103, the terminal 20A uses the resource autonomously selected at step S101 to transmit SCI (Sidelink Control Information) via a PSCCH and/or a PSSCH and SL data in a PSSCH. For example, the terminal 20A may use a frequency resource adjacent to a frequency resource of the PSSCH with the same time resource as at least a portion of a time resource of the PSSCH to transmit the PSCCH.

The terminal 20B receives the SCI (PSCCH) and the SL data (PSSCH and/or PSSCH) transmitted from the terminal 20A. The received SCI may include information for a resource of a PSFCH for transmission of a HARQ-ACK corresponding to reception of the data. The terminal 20A may include the information for the autonomously selected resource in the SCI for transmission, and then transmit the SCI.

At step S104, the terminal 20B uses the PSFCH resource determined from the received SCI to transmit the HARQ-ACK for the received data to the terminal 20A.

At step S105, if the HARQ-ACK received at step S104 indicates a request for retransmission, that is, if it is a NACK (negative response), the terminal 20A retransmits the PSCCH and the PSSCH to the terminal 20B. The terminal 20A may use the autonomously selected resource to retransmit the PSCCH and the PSSCH.

Note that if the HARQ control is not performed, steps S104 and S105 need not be performed.

FIG. 11 is a sequence diagram illustrating a V2X operation example (2). Blind retransmission that does not rely on the HARQ control may be performed so as to improve a success rate of transmission or a reachable distance.

At step S201, the terminal 20A autonomously selects a resource to be used for a PSCCH and a PSSCH from a resource selection window having a predetermined period. The resource selection window may be configured to the terminal 20 by the base station 10.

At steps S202 and S203, the terminal 20A uses the resource autonomously selected at step S201 to transmit SCI via the PSCCH and/or PSSCH and SL data via the PSSCH. For example, the terminal 20A may use a frequency resource adjacent to a frequency resource of the PSSCH with the same time resource as at least a portion of a time resource of the PSSCH to transmit the PSCCH.

At step S204, the terminal 20A uses the resource autonomously selected at step S201 to retransmit the SCI via the PSCCH and/or PSSCH and the SL data via the PSSCH to the terminal 20B. The retransmission at step S204 may be performed multiple times.

Note that if the blind retransmission is not performed, step S204 need not be performed.

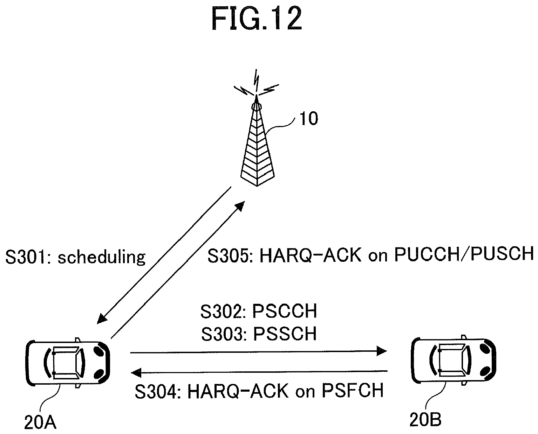

FIG. 12 is a sequence diagram illustrating a V2X operation example (3). The base station 10 may perform a scheduling for sidelink. In other words, the base station 10 may determine a resource to be used for sidelink by the terminal 20 and transmit information indicating the resource to the terminal 20. In addition, in a case where the HARQ control is applied, the base station 10 may transmit information indicating a PSFCH resource to the terminal 20.

At step S301, the base station 10 performs an SL scheduling for the terminal 20A by transmitting DCI (Downlink Control Information) via a PDCCH. Hereinafter, for convenience, the DCI for the SL scheduling is referred to as SL scheduling DCI.

Also, at step S301, it is expected that the base station 10 also transmits the DCI for a DL scheduling (may be referred to as DL allocation) via the PDCCH. Hereinafter, for convenience, the DCI for the DL scheduling is referred to as DL scheduling DCI. Upon receiving the DL scheduling DCI, the terminal 20A uses a resource specified by the DL scheduling DCI to receive DL data via a PDSCH.

At steps S302 and S303, the terminal 20A uses a resource specified by the SL scheduling DCI to transmit SCI (Sidelink Control Information) via a PSCCH and/or PSSCH and SL data via a PSSCH. Note that only a resource of the PSSCH may be specified by the SL scheduling DCI. In this case, for example, the terminal 20A may use a frequency resource adjacent to a frequency resource of the PSSCH with the same time resource as at least a portion of a time resource of the PSSCH to transmit the PSCCH.

The terminal 20B receives the SCI (PSCCH and/or PSSCH) and the SL data (PSSCH) transmitted from the terminal 20A. The SCI received via the PSCCH and/or PSSCH includes information regarding a resource of a PSFCH for transmitting a HARQ-ACK for reception of the data from the terminal 20B.

The information regarding the resource is included in the DL scheduling DCI or the SL scheduling DCI transmitted from the base station 10 at step S301, and the terminal 20A may acquire the information regarding the resource from the DL scheduling DCI or the SL scheduling DCI, and include the acquired information into the SCI. Alternatively, the information regarding the resource need not be included in the DCI transmitted from the base station 10, and the terminal 20A may autonomously include the information regarding the resource in the SCI, and then transmit the SCI.

At step S304, the terminal 20B uses a resource of the PSFCH determined from the received SCI to transmit a HARQ-ACK for the received data to the terminal 20A.

At step S305, the terminal 20A transmits the HARQ-ACK at a timing (for example, a timing in unit of slot) specified by the DL scheduling DCI (or the SL scheduling DCI) by using a PUCCH (Physical Uplink Control Channel) resource specified by the DL scheduling DCI (or the SL scheduling DCI), and the base station 10 receives the HARQ-ACK. A codebook of the HARQ-ACK may include the HARQ-ACK received from the terminal 20B or an ARQ-ACK generated based on the PSFCH that is not received and the HARQ-ACK for DL data. Note that the HARQ-ACK for DL data is not included. In NR Rel.16, the HARQ-ACK for the DL data need not be included in the codebook of the HARQ-ACK.

Note that if HARQ control is not performed, steps S304 and S305 need not be performed.

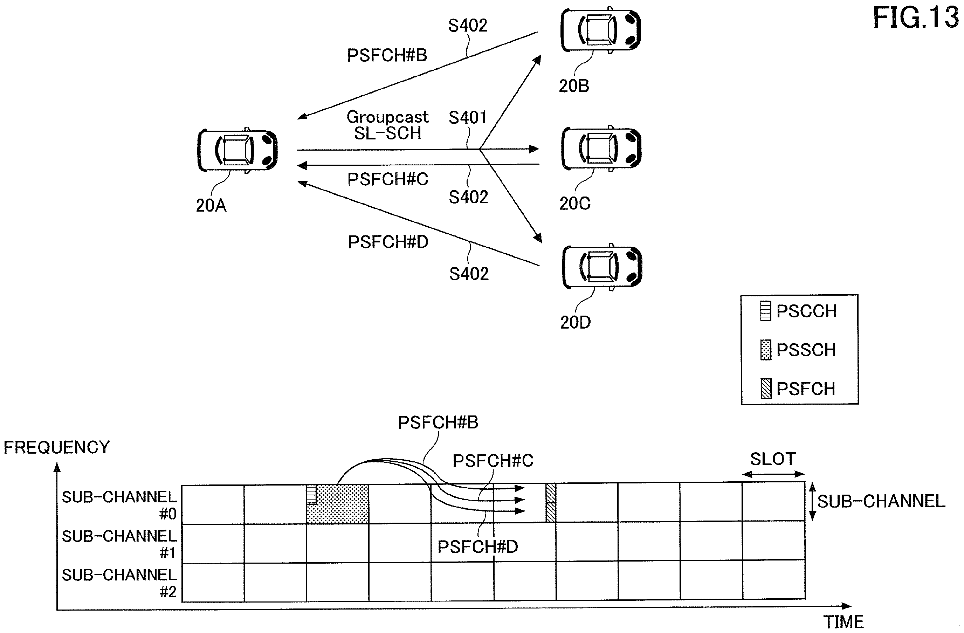

FIG. 13 is a sequence diagram illustrating a V2X operation example (4) . As stated above, transmission of the HARQ response via the PSFCH is supported in the NR sidelink. Note that a format similar to PUCCH (Physical Uplink Control Channel) format 0 is available as the PSFCH format, for example. In other words, in the PSFCH format, the PRB (Physical Resource Block) size is equal to 1, and the ACK and the NACK may be a sequence-based format that can be distinguished based on the sequence difference. The PSFCH format is not limited to the above. A resource of the PSFCH may be placed at the last symbol of a slot or at the multiple symbols at the end of a slot. Also, a cycle N for the PSFCH resource may be configured or may be defined in advance. The cycle N may be configured or may be defined, in unit of slot.

In FIG. 13, the vertical axis corresponds to the frequency domain, and the horizontal axis corresponds to the time domain. The PSCCH may be placed at the first symbol of a slot, at multiple symbols starting from the first symbol of a slot, or at multiple symbols starting from a symbol other than the first symbol. The PSFCH may be placed at the last symbol of a slot, or at multiple symbols at the end of a slot. In the example illustrated in FIG. 13, three sub-channels are configured in a resource pool, and the two PSFCHs are placed at the third slot from the slot where the PSSCH is placed. The arrow from the PSSCH to the PSFCH shows an example of the PSFCH associated with the PSSCH.

In a case where the HARQ response in NR-V2X group cast is option 2 of transmitting the ACK or NACK, a resource to be used for transmission and reception of the PSFCH must be determined. As illustrated in FIG. 13, at step S401, the terminal 20A serving as the transmitting terminal 20 performs group cast to the terminals 20B, 20C and 20D serving as the receiving terminal 20 via an SL-SCH. Then, at step S402, the terminal 20B, 20C and 20D use a PSFCH#B, a PSFCH#C, and a PSFCH#D, respectively, to transmit the HARQ responses to the terminal 20A. Here, as illustrated in the example in FIG. 13, in a case where the number of available PSFCH resources is less than the number of receiving terminals 20 belonging to a group, the allocation of PSFCH resources must be determined. Note that the transmitting terminal 20 may have obtained the number of receiving terminals 20 in the group cast.

In the following, a processing method for the case where an UL channel and a SL channel transmitted by the terminal 20 overlap with each other in at least a time domain, is described.

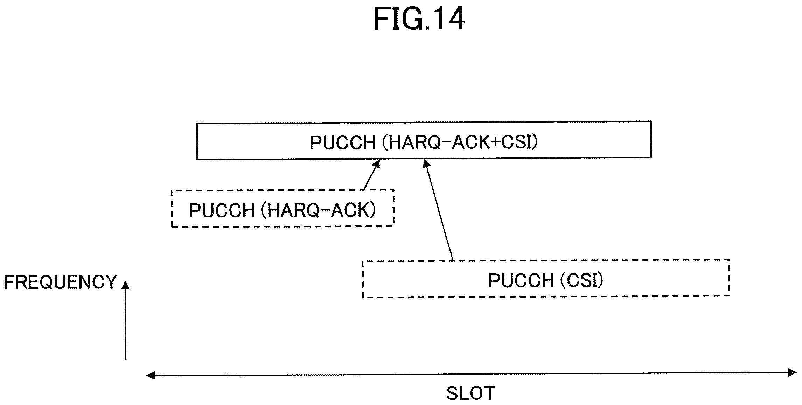

FIG. 14 is a diagram illustrating a UL channel overlapping example. As illustrated in FIG. 14, in a case where multiple UL channels overlap with each other in at least a time domain, these channels may be multiplexed into a single channel. FIG. 14 is an example where a PUCCH carrying an HARQ-ACK and a PUCCH carrying CSI (Channel State Information) are multiplexed and transmitted in the single PUCCH. Note that the time domain illustrated in FIG. 14 may correspond to one slot length.

Alternatively, a part of the multiple channels overlapping in the time domain may be dropped/cancelled and need not be transmitted. For example, in FIG. 14, the PUCCH carrying the CSI may be dropped, and only the PUCCH carrying the HARQ-ACK may be transmitted. Note that an UL channel may be a PUCCH, a PUSCH, a PRACH, an SRS (Sounding Reference Signal) or the like.

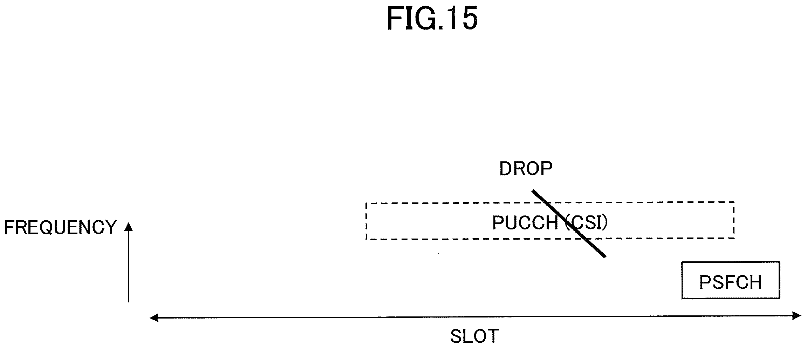

FIG. 15 is a diagram illustrating an example where a SL channel overlaps with an UL channel. As illustrated in FIG. 15, in a case where the SL channel overlaps with the UL channel in at least a time domain, one of the channels may be prioritized, and transmission of the un-prioritized channel may be dropped or transmission power of the un-prioritized channel may be reduced, based on at least one of: the indicated, configured or predetermined priority order; and the indicated, configured or predetermined threshold. The term "drop" may be replaced with "cancel" or "stop transmission". FIG. 15 is an example where a PSFCH overlaps with a PUCCH carrying CSI and the PUCCH carrying the CSI is dropped. Note that the time domain illustrated in FIG. 15 may correspond to one slot length. Note that the SL channel may be a S-SSB (Sidelink-SS/PBCH block), a PSCCH, a PSSCH or a PSFCH. Note that the priority order of channels may be dynamically or statically configured or predetermined.

Here, in the case where multiple UL channels overlap with a SL channel in at least a time domain, execution order of which of a first process or a second process is to be executed first has not been specified, the first process being a process in which resolution by multiplexing of, or stopping transmission of, the multiple UL channels is executed, and the second process being a process in which resolution by priority order between the SL channel and the UL channels is executed.

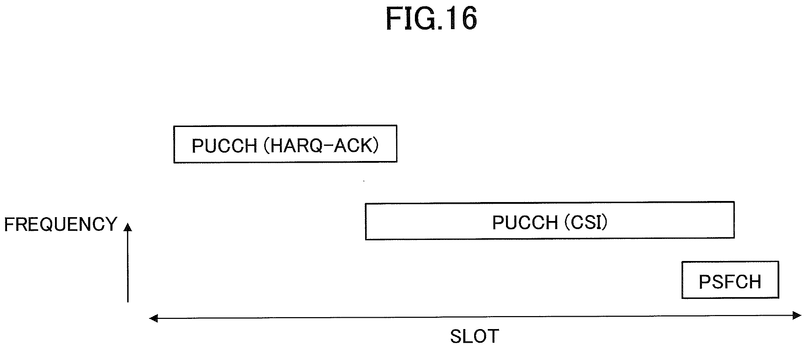

FIG. 16 is a diagram illustrating an example where a SL channel overlaps with multiple UL channels. In the example illustrated in FIG. 16, a PUCCH carrying an HARQ-ACK overlaps with a PUCCH carrying CSI, the PUCCH carrying the CSI overlaps with a PSFCH, and the PUCCH carrying the HARQ-ACK does not overlap with the PSFCH. It is necessary to specify which of a first process or a second process is to be executed first, the first process being a process in which resolution by multiplexing or stopping transmission is executed with respect to the overlapping of the PUCCH carrying the HARQ-ACK and the PUCCH carrying the CSI, and the second process being a process in which resolution by priority order is executed with respect to the PUCCH carrying the CSI and the PSFCH. Note that FIG. 16 is an example where a SL channel overlaps with a part of UL channels and the part of UL channels overlaps with another UL channel. As another example, the case where all UL channels overlap with a SL channel is assumed. Note that a time domain illustrated in FIG. 16 may correspond to one slot length.

Therefore, an operation related to: the resolution by UL multiplexing/stopping transmission; and the resolution by SL/UL priority order, may be determined as illustrated in A) to I) below. The determination of the operation may be made based on a specific condition. Note that "the resolution by UL multiplexing/stopping transmission" may be an operation of multiplexing mutually overlapping UL channels, an operation of stopping transmission of a part of these UL channels and/or an operation of stopping transmission of one UL channel. "The resolution by SL/UL priority order" may be an operation in which one of mutually overlapping SL channel and UL channels is prioritized and transmission of the un-prioritized channels is dropped or transmission power of the un-prioritized channels is reduced.
A) perform resolution by SL/UL priority order after execution of the resolution by UL multiplexing/stopping transmission
B) perform resolution by UL multiplexing/stopping transmission after execution of the resolution by SL/UL priority order
C) switch between the above A) and the above B) based on a state related to an UL channel
D) switch between the above A) and the above B) based on a state related to a SL channel
E) switch between the above A) and the above B) based on the channel priority order
F) switch between the above A) and the above B) based on the SL resource allocation mode
G) switch between the above A) and the above B) based on a state related to overlapping
H) switch between the above A) and the above B) based on whether simultaneous transmission of a SL and an UL is enabled
I) define an operation for the case where a SL channel overlaps with an UL channel after execution of the above B)

The operations of the terminal 20 can be clarified for a case where multiple UL channels overlap with each other and where a UL channel overlaps with a SL channel by determining the operations illustrated in the above A) to I).

Note that "UL multiplexing/stopping transmission" may be replaced with "UL multiplexing/stopping transmission" and/or "SL multiplexing/stopping transmission". In other words, the situation where multiple SL channels overlap with each other may be assumed.

With respect to "the resolution by SL/UL priority order", in a case where multiple UL channels overlap with one or more SL channels, the priority order may be applied based on an UL channel having the highest priority among the multiple UL channels (the value indicating the priority may be the lowest), and/or in a case where multiple pieces of information are included in a single UL channel and the UL channel overlaps with one or more SL channels, the information piece having the highest priority among the information pieces may be assumed as the priority of the UL channel. Also, with respect to "the resolution by SL/UL priority order", in a case where multiple SL channels overlap with one or more UL channels, the priority order may be applied based on a SL channel having the highest priority among the multiple SL channels (the value indicating the priority may be the lowest) . As stated above, the value indicating the priority corresponding to the channel having the highest priority may be the lowest value.

Here, the highest priority P1 among the multiple UL channels and/or priority P2 of one UL channel including the multiple information pieces may be determined in accordance with one of the methods illustrated in a) to c) below or combinations thereof.
a) make determination based on types of transmitted information. For example, in a case where priorities of an HARQ-ACK and an SR are targeted, the priority of the HARQ-ACK may be assumed to be higher than the priority of the SR. Alternatively, in a case where the priority of the physical layer of an HARQ-ACK is 1, the priority of the HARQ-ACK may be assumed to be higher than the priority of the SR, and in a case where the priority of the physical layer of the HARQ-ACK is 0, the priority of the SR may be assumed to be higher than the priority of the HARQ-ACK.
b) associate the priority of a physical layer with the priority of an upper layer and make determination based on the associated priorities. For example, the priority of the physical layer associated with an HARQ-ACK is referred to as P, and it is associated with priority X of an upper layer in a case where P=0, and it is associated with priority Y of an upper layer in a case where P=1. The priorities of an HARQ-ACK and an SR are compared using X and Y, and the higher priority is assumed to be P1 or P2. Alternatively, for example, the priority of an upper layer associated with an SR may be associated with the priority of the physical layer, and the priorities of an HARQ-ACK and an SR may be compared using the priorities of the physical layer.
c) make determination based on types of channels

A method of "the resolution by SL/UL priority order" may be a method based on: an UL channel having the highest priority and/or transmission information; and an SL channel having the highest priority.

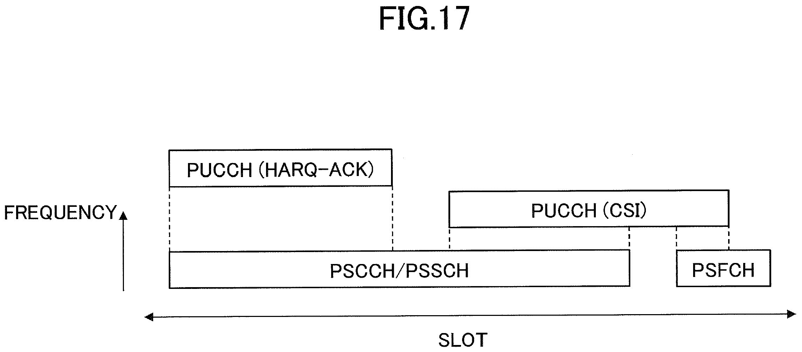

FIG. 17 is a diagram illustrating a channel group. The operations illustrated in the above A) to I) may be applied to a group including an SL channel and an UL channel. The group may be defined by adding a channel overlapping with at least one of channels included in the group to the group, and in a case where another channel overlapping with the added channel is present, the group may be defined by repeating the process of further adding the other overlapping channel to the group. Note that the time domain illustrated in FIG. 17 may correspond to one slot length.

For example, a PSCCH/PSSCH illustrated in FIG. 17 is assumed to be a channel included in the group. A PUCCH (HARQ-ACK) and a PUCCH (CSI) overlapping with the PSCCH/PSSCH are added to the group. Furthermore, because the PUCCH (CSI) overlaps with a PSFCH, the PSFCH is added to the group. Accordingly, in the example illustrated in FIG. 17, the group includes four channels, the PUCCH (HARQ-ACK), the PUCCH (CSI), the PSCCH/PSSCH and the PSFCH.

Note that an SL channel and an UL channel may be allocated to the same carrier or different carriers.

Note that the PSCCH, the PSSCH or the PSFCH may include or need not include an AGC (Auto Gain Control) symbol (the symbol to which the same information as the next symbol is mapped).

Note that the PSCCH, the PSSCH, the PSFCH or an S-SSB may include or need not include the respective last symbol and the subsequent symbol (the symbol where nothing is transmitted).

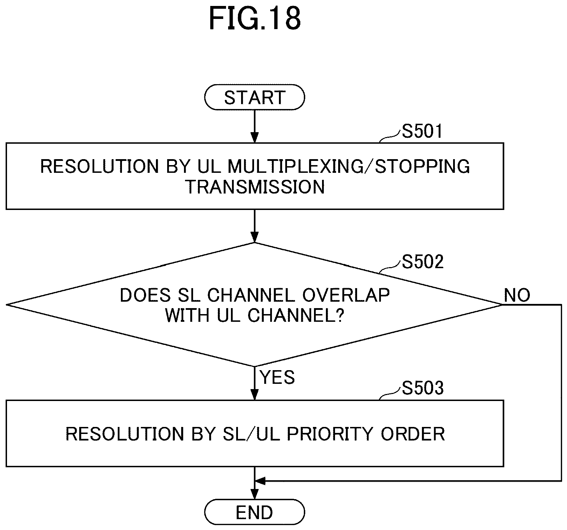

FIG. 18 is a flowchart illustrating an operation example (1) related to channel overlapping according to an embodiment of the present invention. The above A) may be performed with the flow chart illustrated in FIG. 18.

At step S501, the terminal 20 performs the resolution by UL multiplexing/stopping transmission. Subsequently, it is determined whether the SL channel overlaps with the UL channel after the resolution (S502). In a case where the SL channel overlaps with the UL channel after the resolution (YES at S502), the process proceeds to step S503, and in a case where the SL channel does not overlap with the UL channel after the resolution (NO at S502), the flow ends. At step S503, the terminal 20 performs the resolution by SL/UL priority order, and the flow ends.

The process illustrated in the above A) is completed by performing the resolution of the overlapping channels twice, and accordingly the configuration of the terminal 20 can be simplified.

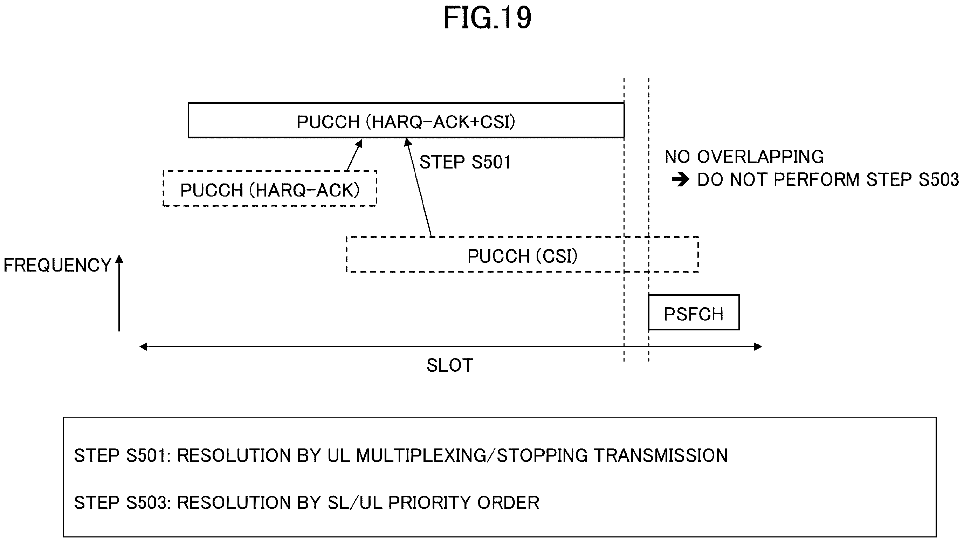

FIG. 19 is a diagram illustrating an operation example (1) associated with channel overlapping according to an embodiment of the present invention. FIG. 19 illustrates an example of a case where step S502 illustrated in FIG. 18 is NO, that is, the SL channel does not overlap with the UL channel after the resolution. Note that the time domain illustrated in FIG. 19 may correspond to one slot length. As illustrated in FIG. 19, a PUCCH (HARQ-ACK) and a PUCCH (CSI) are multiplexed at step S501. The multiplexed PUCCH (HARQ-ACK + CSI) does not overlap with a PSFCH, and accordingly the operation illustrated in the above A) is completed without execution of step S503.

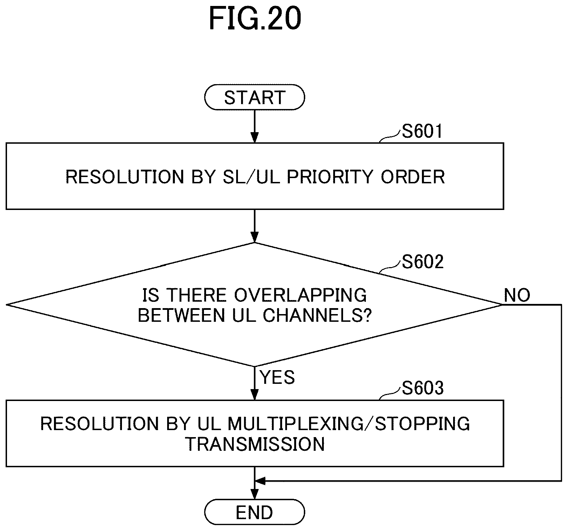

FIG. 20 is a flowchart illustrating an operation example (2) related to channel overlapping according to an embodiment of the present invention. The above B) may be performed with the flowchart illustrated in FIG. 20.

At step S601, the terminal 20 performs the resolution by SL/UL priority order. Subsequently, it is determined whether UL channels overlap with each other (S602). In a case where the UL channels overlap with each other (YES at S602), the process proceeds to step S603, and in a case where the UL channels do not overlap with each other (NO at S602), the flow ends. At step S603, the terminal 20 performs the resolution by UL multiplexing/stopping transmission, and the flow ends.

According to the process illustrated in the above B), no impact is given to information included in the UL channel that does not overlap with the SL channel. In other words, as much information as possible can be transmitted and received.

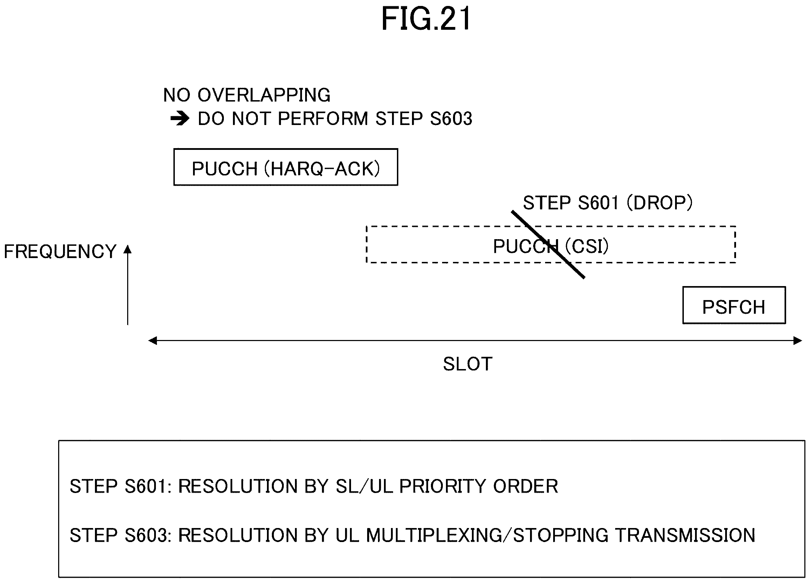

FIG. 21 is a diagram illustrating an operation example (2) related to channel overlapping according to an embodiment of the present invention. FIG. 21 illustrates an example of a case where step S602 illustrated in FIG. 20 is NO, that is, UL channels does not overlap with each other. As illustrated in FIG. 20, at step S601, a PUCCH (CSI) is dropped. Accordingly, a PUCCH (HARQ-ACK) does not overlap with the PUCCH (CSI), and accordingly the operation illustrated in the above B) is completed without execution of step S603. Note that the time domain illustrated in FIG. 21 may correspond to one slot length.

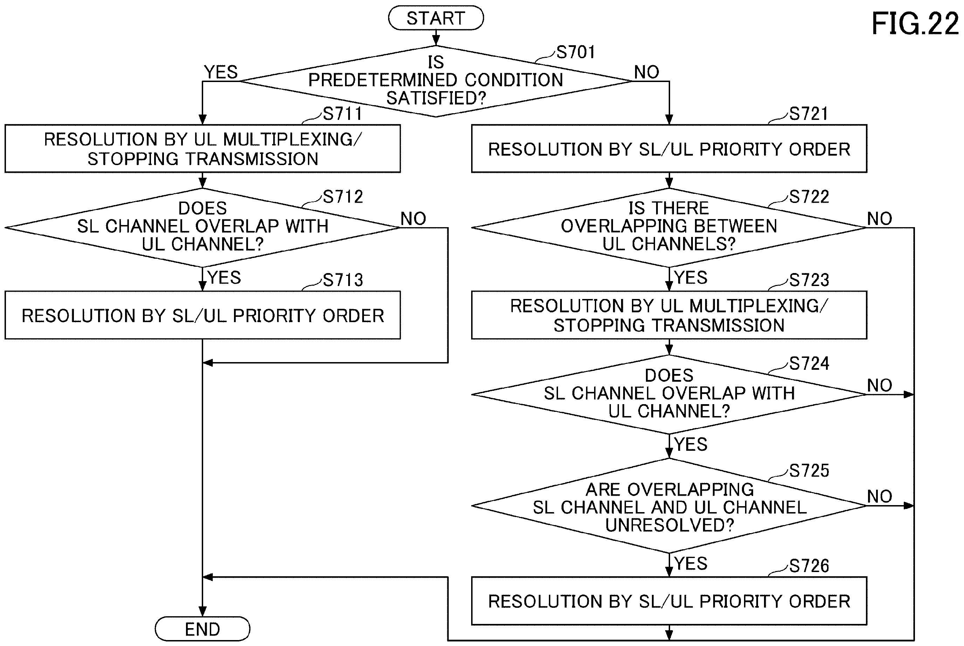

FIG. 22 is a flowchart illustrating an operation example (3) related to channel overlapping according to an embodiment of the present invention. A switching method between the above A and B) based on a predetermined condition is described with reference to FIG. 22.

At step S701, the terminal 20 determines whether a predetermined condition is satisfied. In a case where the predetermined condition is satisfied (YES at S701), the process proceeds to step S711, and in a case where the predetermined condition is not satisfied (NO at S701), the process proceeds to step S721.

At step S711, the terminal 20 performs the resolution by UL multiplexing/stopping transmission. Subsequently, it is determined whether an SL channel overlaps with an UL channel after the resolution (S712). In a case where the SL channel overlaps with the UL channel after the resolution (YES at S712), the process proceeds to step S713, and in a case where the SL channel does not overlap with UL channel after the resolution (NO at S712), the flow ends. At step S713, the terminal 20 performs the resolution by SL/UL priority order, and the flow ends.

On the other hand, at step S721, the terminal 20 performs the resolution by SL/UL priority order. Subsequently, it is determined whether UL channels overlap with each other (S722). In a case where the UL channels overlap with each other (YES at S722), the process proceeds to step S723, and in a case where the UL channels do not overlap with each other (NO at S722), the flow ends. At step S723, the terminal 20 performs the resolution by UL multiplexing/stopping transmission. Subsequently, and determines whether an SL channel overlaps with an UL channel after the resolution (S724) . In a case where the SL channel overlaps with an UL channel after the resolution (YES at S724), the process proceeds to step S725, and in a case where the SL channel does not overlap with an UL channel after the resolution (NO at S724), the flow ends. At step S725, the terminal 20 determines whether the overlapping SL and UL channels are unresolved. In a case where the overlapping SL and UL channels are unresolved (YES at S725), the process proceeds to step S726, and in a case where the overlapping SL and UL channels are not unresolved, that is, in a case where the overlapping SL and UL channels have been resolved (NO at S725), the flow ends. At step S726, the terminal 20 performs the resolution by SL/UL priority order, and the flow ends.

Note that steps S724, S725 and S726 may be omitted. Namely, the terminal 20 performs step S723, and then the flow may end.

Here, the above C) may be performed by assuming that the predetermined condition at step S701 illustrated in FIG. 22 is "multiple PUCCH overlaps exist in a group". In other words, in a case where the multiple PUCCH overlaps exist in the group, the terminal 20 may perform the above A) or steps including step S711 and thereafter. On the other hand, in a case where the multiple PUCCH overlaps do not exist in the group, the terminal 20 may perform the above B) or steps including step S721 and subsequent steps.

With respect to the multiplexing of the PUCCH, a time/frequency resource of the resulting PUCCH can be different from that of the PUCCH before multiplexing. Accordingly, in a case where the above B) is applied, there may be a case in which an SL channel overlaps with an UL channel after execution of the resolution by UL multiplexing/stopping transmission, and it may be necessary to perform the resolution by SL/UL priority order again. Accordingly, in a case where the multiple PUCCH overlaps exist in the group, the above A) may be applied. Note that because the time/frequency resource of a UL channel other than PUCCH is not changed by multiplexing/stopping transmission, the possibility of the SL channel overlapping with the UL channel after execution of the resolution by UL multiplexing/stopping transmission need not be assumed.

As illustrated in the above C), the above A) and B) are switched based on the state related to the UL channel, and accordingly the terminal configuration can be kept simple, and as much information as possible can be transmitted and received.

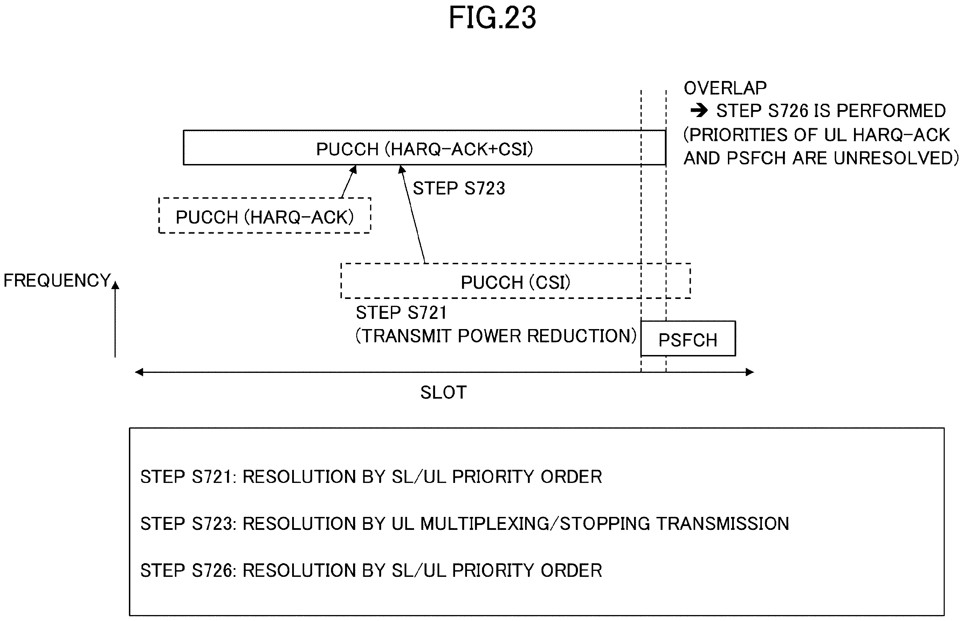

FIG. 23 is a diagram illustrating an operation example (3-1) related to channel overlapping according to an embodiment of the present invention. FIG. 23 illustrates an example where, in a case where multiple PUCCH overlaps exist in a group, steps including step S721 and subsequent steps illustrated in FIG. 22 are performed. Here, the predetermined condition at step S701 may be "multiple PUCCH overlaps do not exist in a group".

In the example illustrated in FIG. 23, the group is composed of a PSFCH, a PUCCH (CSI) and a PUCCH (HARQ-ACK) . Note that the time domain illustrated in FIG. 23 may correspond to one slot length. Also, the terminal 20 may be enabled to perform simultaneous transmission of an SL and an UL. At step S721, the terminal 20 performs the resolution by SL/UL priority order for the group, and transmission power of the PUCCH (CSI) overlapping with the PSFCH is decreased. Subsequently, because there is overlapping between UL channels (YES at S722), at step S723, the terminal 20 performs the resolution by UL multiplexing/stopping transmission and multiplexes the PUCCH (CSI) and the PUCCH (HARQ-ACK) into a PUCCH (HARQ-ACK + CSI).

Subsequently, because the PSFCH of an SL channel overlaps with the PUCCH (HARQ-ACK + CSI) of an UL channel (YES at S724), at step S725, the terminal 29 determines whether the overlapping SL and UL channels are unresolved. Here, because the priority order of the PUCCH (HARQ-ACK) and the PSFCH is unresolved (YES at S725), at step S726, the terminal 20 performs the resolution by SL/UL priority order.

Here, the above D) may be performed by using the predetermined condition as "the SL channel is: a PSCCH/PSSCH accompanied with a PSFCH occasion in a slot; or a PSFCH" at step S701 illustrated in FIG. 22, for example. In other words, in a case where the SL channel is a PSCCH/PSSCH accompanied with the PSFCH occasion in a slot or a PSFCH, the terminal 20 may perform the above A) or steps including step S711 and subsequent steps. On the other hand, in a case where the SL channel is neither a PSCCH/PSSCH accompanied with the PSFCH occasion in a slot nor a PSFCH, that is, in a case where the SL channel is an S-SSB, PSCCH/PSSCH that is not accompanied with the PSFCH occasion in a slot, the terminal 20 perform the above B) or steps including step S721 and subsequent steps.

Because the S-SSB, PSSCH/PSSCH that is not accompanied with the PSFCH in a slot is the SL channel existing across the whole slot, the resolution by priority order is performed for all UL channels in the slot. Accordingly, it is not necessary to perform the resolution by SL/UL priority order in the above B) again. On the other hand, in a case where the SL channel is a PSCCH/PSSCH accompanied with the PSFCH occasion in a slot or a PSFCH, the PSCCH/PSSCH or PSFCH is an SL channel allocated to a part of the slot, it is required to perform the resolution by SL/UL priority order in the above B) again. Accordingly, in a case where the SL channel is the PSCCH/PSSCH accompanied with the PSFCH occasion in a slot or the PSFCH, the above A) may be performed.

As illustrated in the above D), by switching between the above A) and B) based on a state related to the SL channel, the terminal configuration can be kept simple, and as much information as possible can be transmitted and received.

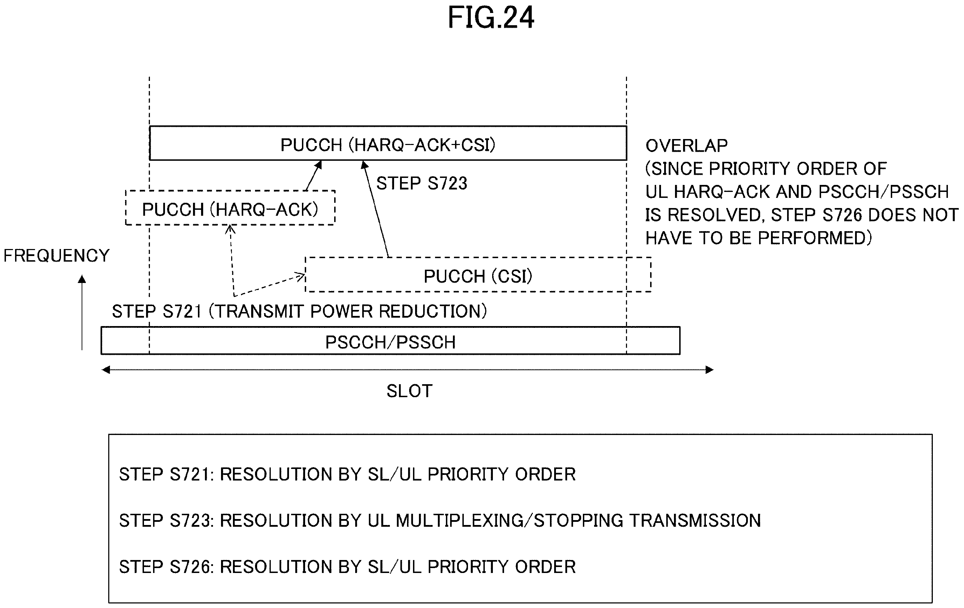

FIG. 24 is a diagram illustrating an operation example (3-2) related to channel overlapping according to an embodiment of the present invention. FIG. 24 illustrates an example where, in a case where the SL channel is an S-SSB, PSCCH/PSSCH that is not accompanied with a PSFCH occasion, steps including step S721 and subsequent steps are performed. Here, the predetermined condition at step S701 may be "the SL channel being the PSCCH/PSSCH accompanied with the PSFCH occasion in a slot or the PSFCH".

In the example illustrated in FIG. 24, the group is composed of a PSCCH/PSSCH, a PUCCH (CSI) and a PUCCH (HARQ-ACK). Note that the time domain illustrated in FIG. 24 may correspond to one slot length. Also, the terminal 20 may be enabled to perform simultaneous transmission of an SL and an UL. At step S721, the terminal 20 performs the resolution by SL/UL priority order for a group, and decreases transmission power of the PUCCH (HARQ-ACK) and the PUCCH (CSI) that overlap with a PSCCH/PSSCH. Subsequently, because UL channels overlap with each other (YES at S722), at step S723, the terminal 20 performs the resolution by UL multiplexing/stopping transmission and multiplexes the PUCCH (HARQ-ACK) and the PUCCH (CSI) into a PUCCH (HARQ-ACK + CSI).

Subsequently, because the PSCCH/PSSCH of an SL channel overlaps with a PUCCH (HARQ-ACK + CSI) of an UL channel (YES at S724), at step S725, the terminal 20 determines whether the overlapping SL and UL channels are unresolved. Here, the priority order of the PUCCH (HARQ-ACK) and the PSCCH/PSSCH is not unresolved (NO at S725), and step S726 does not need to be performed.

Here, the above E) may be performed by assuming that the predetermined condition is "resource allocation mode of an SL being mode 2" at step S701 illustrated in FIG. 22. In other words, in a case where the resource allocation mode of an SL is mode 2, the terminal 20 may perform the above A) or steps including step S711 and subsequent steps. On the other hand, in a case where the resource allocation mode of an SL is mode 1, the terminal 20 may perform the above B) or steps including step S721 and subsequent steps. For example, in a case where the resource allocation mode of an SL is resource allocation mode 1 and where the above B) is performed, it is possible to avoid overlapping of an SL channel and an UL channel by a base station scheduler.

As illustrated in the above E), by switching between the above A) and B) based on the resource allocation mode of an SL, the terminal configuration can be kept simple, and as much information as possible can be transmitted and received.

Here, the above F) may be performed by assuming that the predetermined condition is "the priority of an SL channel being a specific priority" at step S701 illustrated in FIG. 22. For example, in a case where the priority of an SL channel is equal to or greater than a specific priority, the terminal 20 may perform the above A) or steps including step S711 and subsequent steps. On the other hand, in a case where the priority of an SL channel is below the specific priority, the terminal 20 may perform the above B) or steps including step S721 and subsequent steps. Also, the above B) or the steps may be performed by assuming that the predetermined condition is "the priority of an UL channel being the specific priority".

As illustrated in the above F), by switching between the above A) and B) based on channel priorities, the terminal configuration can be kept simple, and information can be transmitted and received depending on the priority order.

Here, the above G) may be performed by assuming that the predetermined condition is "an UL channel that does not overlap with an SL channel exist in a group" at step S701 illustrated in FIG. 22. For example, in a case where an UL channel that does not overlap with an SL channel exists in the group, the terminal 20 may perform the above A) or steps including step S711 and subsequent steps. On the other hand, in a case where the UL channel that does not overlap with the SL channel does not exist in the group, the terminal 20 may perform the above B) or steps including step S721 and subsequent steps. Note that "the group" may be replaced with "a slot".

As illustrated in the above G), by switching between the above A) and B) based on the overlapping state, the terminal configuration can be kept simple, and as much information as possible can be transmitted and received.

Here, the above H) may be performed by assuming that the predetermined condition is "simultaneous transmission of an SL and an UL being enabled" at step S701 illustrated in FIG. 22. For example, in a case where the simultaneous transmission of an SL and an UL is enabled, the terminal 20 may perform the above A) or steps including step S711 and subsequent steps. On the other hand, in a case where the simultaneous transmission of an SL and an UL is not enabled, the terminal 20 may perform the above B) or steps including step S721 and subsequent steps.

As illustrated in the above H), by switching between the above A) and B) based on a simultaneous transmission capability of an SL and an UL, the terminal configuration can be kept simple, and as much information as possible can be transmitted and received.

Here, in the above I), the terminal 20 need not assume that an SL channel overlaps with an UL channel after execution of the above B). In other words, steps including step S724 and subsequent steps illustrated in FIG. 22 need not be performed.

Also, in the above I), in a case where an SL channel overlaps with an UL channel after execution of the above B), the terminal 20 may perform the resolution by SL/UL priority order. In other words, in a case where step S724 illustrated in FIG. 22 is YES, step S726 may be performed.

By performing the above I) as stated above, it is possible to clarify an operation of the terminal 20 for the case where an SL channel overlaps with an UL channel again.

According to the above-stated embodiments, it is possible to clarify an operation of the terminal 20 for the case where multiple UL channel overlaps with each other and where an UL channel overlaps with an SL channel.

In other words, in a case where a channel of inter-terminal direct communication overlaps with an uplink channel, which of the channels is to be transmitted can be determined.

### (Device Arrangement)

Next, exemplary functional arrangements of the base station 10 and the terminal 20 that perform operations and actions as stated above are described. The base station 10 and the terminal 20 include functions of implementing the above-stated embodiments. Note that each of the base station 10 and the terminal 20 may have only a subset of the functions of the embodiments.

### <Base station 10>

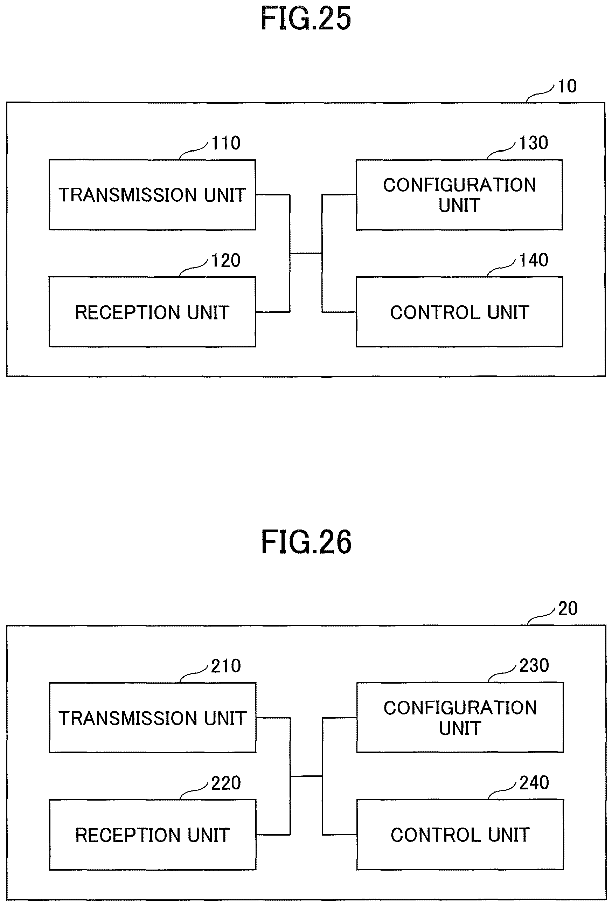

FIG. 25 illustrates an exemplary functional arrangement of the base station 10. As shown in FIG. 25, the base station 10 includes a transmission unit 110, a reception unit 120, a configuration unit 130 and a control unit 140. The functional arrangement shown in FIG. 25 is only one example. The functional separation and the names of the functional units may be arbitrary as long as operations according to the present embodiment can be achieved.

The transmission unit 110 includes a function of generating a signal for transmission to the side of the terminal 20 and wirelessly transmitting the signal. The reception unit 120 includes a function of receiving various signals transmitted from the terminal 20 and acquiring information for upper layers from the received signals, for example. Also, the transmission unit 110 includes a function of transmitting an NR-PSS, an NR-SSS, an NR-PBCH, a DL/UL control signal, a DL reference signal or the like to the terminal 20.

The configuration unit 130 stores preconfigured configurations and various configurations for transmission to the terminal 20 in a memory device and reads them from the memory device as needed. Contents of the configurations may be configuration information associated with DRX of D2D information or the like, for example.

The control unit 140 performs operations associated with configurations for the terminal 20 to perform D2D communication as stated in conjunction with the embodiments. Also, the control unit 140 transmits a scheduling for D2D communication and DL communication to the terminal 20 via the transmission unit 110. Also, the control unit 140 receives information associated with an HARQ response for D2D communication and DL communication from the terminal 20 via the reception unit 120. The functional portions of the control unit 140 related to signal transmission may be included in the transmission unit 110, and the functional portions of the control unit 140 related to signal reception may be included in the reception unit 120.

### <Terminal 20>

FIG. 26 is a diagram for illustrating one exemplary functional arrangement of the terminal 20 according to an embodiment of the present invention. As illustrated in FIG. 26, the terminal 20 has a transmission unit 210, a reception unit 220, a configuration unit 230 and a control unit 240. The functional arrangement shown in FIG. 26 is only one example. The functional separation and the names of the functional units may be arbitrary as long as operations according to the present embodiment can be achieved.

The transmission unit 210 generates a transmission signal from transmission data and wirelessly transmits the transmission signal. The reception unit 220 wirelessly receives various signals and acquires signals for upper layers from the received physical layer signals. Also, the reception unit 220 has a function of receiving an NR-PSS, an NR-SSS, an NR-PBCH, a DL/UL/SL control signal or a reference signal and so on transmitted from the base station 10. Also, for example, as D2D communication, the transmission unit 210 transmits a PSCCH (Physical Sidelink Control Channel), a PSSCH (Physical Sidelink Shared Channel), a PSDCH (Physical Sidelink Discovery Channel), a PSBCH (Physical Sidelink Broadcast Channel) or the like to other terminals 20, and the reception unit 220 receives the PSCCH, the PSSCH, the PSDCH, the PSBCH or the like from other terminals 20.

The configuration unit 230 stores various configurations received at the reception unit 220 from the base station 10 or the terminal 20 in a memory device and reads them from the memory device as needed. Also, the configuration unit 230 stores preconfigured configurations. Contents of the configurations may be information associated with configuration of D2D communication and so on, for example.

The control unit 240 controls D2D communication to other terminals 20 as stated above in conjunction with the embodiments. Also, the control unit 240 performs operations associated with an HARQ for D2D communication and DL communication. Also, the control unit 240 transmits information associated with an HARQ response for D2D communication and DL communication to other terminal 20 scheduled from the base station 10 to the base station 10. Also, the control unit 240 may perform scheduling for D2D communication for other terminals 20. Also, the control unit 240 may autonomously select a resource for use in D2D communication from a resource selection window based on sensing results. Also, the control unit 240 performs operations for the case where D2D transmission overlaps with UL transmission. The functional portion of the control unit 240 regarding signal transmission may be included in the transmission unit 210, and the functional portion of the control unit 240 regarding signal reception may be included in the reception unit 220.

### (Hardware arrangement)

The block diagrams (FIGS. 25 and 26) used for the description of the above embodiments show blocks of functional units. These functional blocks (components) are implemented by any combination of at least one of hardware and software. In addition, the implementation method of each function block is not particularly limited. That is, each functional block may be implemented using a single device that is physically or logically combined, or may be implemented by directly or indirectly connecting two or more devices that are physically or logically separated (e.g., using wire, radio, etc.) and using these multiple devices. The functional block may be implemented by combining software with the above-described one device or the above-described plurality of devices.

Functions include, but are not limited to, judgment, decision, determination, computation, calculation, processing, derivation, research, search, verification, reception, transmission, output, access, resolution, choice, selection, establishment, comparison, assumption, expectation, deeming, broadcasting, notifying, communicating, forwarding, configuring, reconfiguring, allocating, mapping, assigning, etc. For example, a functional block (component) that functions to transmit is called a transmitting unit or a transmitter. In either case, as described above, the implementation method is not particularly limited.

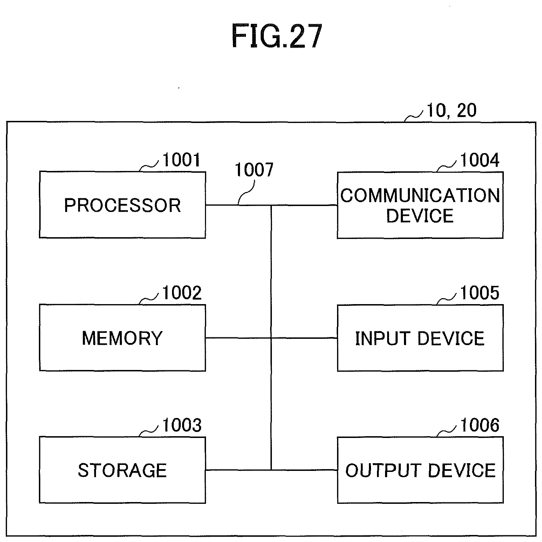

For example, each of the base station 10, the terminal 20 and so on according to one embodiment of the present invention may function as a computer performing operations for a radio communication method according to the present disclosure. FIG. 27 is a diagram illustrating an example of a hardware configuration of the base station 10 and the terminal 20 according to one embodiment of the present disclosure. The base station 10 and the terminal 20 as stated above may be physically configured as a computer device including a processor 1001, a memory 1002, a storage 1003, a communication device 1004, an input device 1005, an output device 1006, a bus 1007, etc.

In the following description, the term "device" can be read as a circuit, a device, a unit, etc. The hardware configuration of the base station 10 and the terminal 20 may be configured to include one or more of the respective devices shown in the figure, or may be configured without some devices.

Each function of the base station 10 and the terminal 20 is implemented by loading predetermined software (program) on hardware, such as the processor 1001 and the memory 1002, so that the processor 1001 performs computation and controls communication by the communication device 1004, and at least one of reading and writing of data in the memory 1002 and the storage 1003.

The processor 1001, for example, operates an operating system to control the entire computer. The processor 1001 may be configured with a central processing unit (CPU: Central Processing Unit) including an interface with a peripheral device, a control device, a processing device, a register, etc. For example, the above-stated control units 140 and 240 or the like may be implemented with the processor 1001.

Additionally, the processor 1001 reads a program (program code), a software module, data, etc., from at least one of the storage 1003 and the communication device 1004 to the memory 1002, and executes various processes according to these. As the program, a program is used which causes a computer to execute at least a part of the operations described in the above-described embodiment. For example, the control unit 140 of the base station 10 shown in FIG. 25 may be implemented by a control program that is stored in the memory 1002 and that is operated by the processor 1001. Also, for example, the control unit 240 of the terminal 20 shown in FIG. 26 may be implemented by a control program that is stored in the memory 1002 and that is operated by the processor 1001. While the various processes described above are described as being executed in one processor 1001, they may be executed simultaneously or sequentially by two or more processors 1001. The processor 1001 may be implemented by one or more chips. The program may be transmitted from a network via a telecommunications line.

The memory 1002 is a computer readable storage medium, and, for example, the memory 1002 may be formed of at least one of a ROM (Read Only Memory), an EPROM (Erasable Programmable ROM), an EEPROM (Electrically Erasable Programmable ROM), a RAM (Random Access Memory), etc. The memory 1002 may be referred to as a register, a cache, a main memory (main storage device), etc. The memory 1002 may store a program (program code), a software module, etc., which can be executed for implementing the radio communication method according to one embodiment of the present disclosure.

The storage 1003 is a computer readable storage medium and may be formed of, for example, at least one of an optical disk, such as a CD-ROM (Compact Disc ROM), a hard disk drive, a flexible disk, an optical magnetic disk (e.g., a compact disk, a digital versatile disk, a Blu-ray (registered trademark) disk, a smart card, a flash memory (e.g., a card, a stick, a key drive), a floppy (registered trademark) disk, a magnetic strip, etc. The storage 1003 may be referred to as an auxiliary storage device. The above-described storage medium may be, for example, a database including at least one of the memory 1002 and the storage 1003, a server, or any other suitable medium.

The communication device 1004 is hardware (transmitting and receiving device) for performing communication between computers through at least one of a wired network and a wireless network, and is also referred to, for example, as a network device, a network controller, a network card, a communication module, etc. The communication device 1004 may be configured to include, for example, a high frequency switch, a duplexer, a filter, a frequency synthesizer, etc., to implement at least one of frequency division duplex (FDD: Frequency Division Duplex) and time division duplex (TDD: Time Division Duplex). For example, a transceiver antenna, an amplification unit, a transceiver unit, a channel interface or the like may be implemented with the communication device 1004. The transceiver unit may have an implementation with the transmission unit and the reception unit that are physically or logically separated.

The input device 1005 is an input device (e.g., a keyboard, a mouse, a microphone, a switch, a button, a sensor, etc.) that receives an external input. The output device 1006 is an output device (e.g., a display, speaker, LED lamp, etc.) that performs output toward outside. The input device 1005 and the output device 1006 may be configured to be integrated (e.g., a touch panel).

Each device, such as processor 1001 and memory 1002, is also connected by the bus 1007 for communicating information. The bus 1007 may be formed of a single bus or may be formed of different buses between devices.

Also, the base station 10 and the terminal 20 may include hardware, such as a microprocessor, a digital signal processor (DSP: Digital Signal Processor), an ASIC (Application Specific Integrated Circuit), a PLD (Programmable Logic Device), and a FPGA (Field Programmable Gate Array), which may implement some or all of each functional block. For example, the processor 1001 may be implemented using at least one of these hardware components.

### (Conclusion of the embodiments)

As stated above, according to an embodiment of the present invention, there is provided a terminal, comprising: a control unit configured to, in a case where multiple first channels for transmission to a base station overlap with a second channel for transmission to another terminal in a time domain, determine an operation to be applied to the multiple first channels and the second channel; and a transmission unit configured to apply the operation to transmit the channel, wherein the control unit determines which of a first operation or a second operation is to be performed first, the first operation being applied to the multiple first channels and the second operation being applied to at least one of the second channel and the multiple first channels.

According to the above arrangement, the terminal 20 can clarify an operation of the terminal 20 for the case where multiple UL channels overlap with each other and where an UL channel overlaps with an SL channel. In other words, in a case where a channel of inter-terminal direct communication overlaps with an uplink channel, it is possible to determine a channel to be transmitted.

The first operation may be an operation of multiplexing or stopping transmission, and the second operation may be an operation of stopping transmission of an un-prioritized channel or of decreasing transmission power. According to the arrangement, the terminal 20 can clarify an operation of the terminal 20 for the case where multiple UL channels overlap with each other and where an UL channel overlaps with an SL channel.

The control unit may first perform the first operation in a case where multiple overlaps among the multiple first channels arise and first performs the second operation in a case where the multiple overlaps among the multiple first channels do not arise. According to the arrangement, the operation can be completed by performing the resolution of overlapping channels twice, and it is possible to simplify the configuration of the terminal 20.

The control unit may first perform the second operation in a case where the second channel does not include an occasion for transmission and reception of an HARQ (Hybrid Automatic Repeat Request) response and first perform the first operation in a case where the second channel includes the occasion for transmission and reception of an HARQ response. According to the arrangement, no impact is given to information included in an UL channel that does not overlap with an SL channel. In other words, the maximum amount of information can be transmitted and received.

The control unit may first perform the second operation in a case where the base station allocates a resource of the second channel and first perform the first operation in a case where the terminal selects a resource of the second channel. According to the arrangement, it is possible for a base station scheduler to avoid overlap between an SL channel and an UL channel.

Also, according to an embodiment of the present invention, there is provided a communication method implemented by a terminal, comprising: in a case where multiple first channels for transmission to a base station overlap with a second channel for transmission to another terminal in a time domain, determining an operation to be applied to the multiple first channels and the second channel; and applying the operation to transmit a channel, wherein the determining includes determining which of a first operation or a second operation is to be performed first, the first operation being applied to the multiple first channels and the second operation being applied to at least one of the second channel and the multiple first channels.

According to the above arrangement, the terminal 20 can clarify an operation of the terminal 20 for the case where multiple UL channels overlap with each other and where an UL channel overlaps with an SL channel. In other words, in a case where a channel of inter-terminal direct communication overlaps with an uplink channel, it is possible to determine a channel to be transmitted.

### (Supplemental embodiments)

The embodiment of the present invention has been described above, but the disclosed invention is not limited to the above embodiment, and those skilled in the art would understand that various modified examples, revised examples, alternative examples, substitution examples, and the like can be made. In order to facilitate understanding of the present invention, specific numerical value examples are used for explanation, but the numerical values are merely examples, and any suitable values may be used unless otherwise stated. Classifications of items in the above description are not essential to the present invention, contents described in two or more items may be used in combination if necessary, and contents described in an item may be applied to contents described in another item (unless a contradiction arises). The boundaries between the functional units or the processing units in the functional block diagrams do not necessarily correspond to the boundaries of physical components. Operations of a plurality of functional units may be physically implemented by a single component and an operation of a single functional unit may be physically implemented by a plurality of components. Concerning the processing procedures described above in the embodiment, the orders of steps may be changed unless a contradiction arises. For the sake of convenience for describing the processing, the base station 10 and the terminal 20 have been described with the use of the functional block diagrams, but these apparatuses may be implemented by hardware, software, or a combination thereof. Each of software functioning with a processor of the base station apparatus 10 according to the embodiment of the present invention and software functioning with a processor of the user equipment 20 according to the embodiment of the present invention may be stored in a random access memory (RAM), a flash memory, a read-only memory (ROM), an EPROM, an EEPROM, a register, a hard disk (HDD), a removable disk, a CD-ROM, a database, a server, or any suitable recording media.

Also, the notification of information is not limited to the aspect or embodiment described in the present disclosure, but may be performed by other methods. For example, the notification of information may be performed by physical layer signaling (for example, DCI (Downlink Control Information), UCI (Uplink Control Information)), higher layer signaling (for example, RRC (Radio Resource Control) signaling, MAC (Medium Access Control) signaling, broadcast information (a MIB (Master Information Block) and a SIB (System Information Block)), other signals, or combinations thereof. The RRC signaling may be also be referred to as an RRC message and may be, for example, an RRC connection setup message, an RRC connection reconfiguration message, or the like.

Each aspect and embodiment described in the present disclosure may be applied to at least one of a system that uses a suitable system such as LTE (Long Term Evolution), LTE-A (LTE-Advanced), SUPER 3G, IMT-Advanced, 4G (4th generation mobile communication system), 5G (5th generation mobile communication system), FRA (Future Radio Access), NR (New Radio), W-CDMA (registered trademark), GSM (registered trademark), CDMA2000, UMB (Ultra Mobile Broadband), IEEE 802.11 (Wi-Fi (registered trademark)), IEEE 802.16 (WiMAX (registered trademark)), IEEE 802.20, UWB (Ultra-WideBand), or Bluetooth (registered trademark), and a next-generation system expanded on the basis thereof. Also, a plurality of systems may be combined and applied (for example, a combination of at least one of LTE and LTE-A with 5G, and the like).

In the operation procedures, sequences, flowcharts, and the like according to each aspect and embodiment described in the present disclosure, the orders of steps may be changed unless a contradiction arises. For example, in the methods described in the present disclosure, elements of various steps are illustrated by using an exemplary order and the methods are not limited to the specific orders presented.

The specific operations performed by the base station 10 described in the present disclosure may in some cases be performed by an upper node. It is clear that, in a network that includes one or more network nodes including the base station 10, various operations performed for communication with the terminal 20 can be performed by at least one of the base station 10 and another network node other than the base station 10 (for example, a MME, a S-GW, or the like may be mentioned, but not limited thereto). In the above, the description has been made for the case where another network node other than the base station 10 is a single node as an example. However, the other network node may be a combination of a plurality of other network nodes (for example, an MME and a S-GW).

Information, signals, or the like described in the present disclosure may be output from an upper layer (or a lower layer) to a lower layer (or an upper layer). Information, signals, or the like described in the present disclosure may be input and output via a plurality of network nodes.

Information or the like that has been input or output may be stored at a predetermined location (for example, a memory) and may be managed with the use of a management table . Information or the like that is input or output can be overwritten, updated, or appended. Information or the like that has been output may be deleted. Information or the like that has been input may be transmitted to another apparatus.

In the present disclosure, determination may be made with the use of a value expressed by one bit (0 or 1), may be made with the use of a Boolean value (true or false), and may be made through a comparison of numerical values (for example, a comparison with a predetermined value).

Regardless of whether software is referred to as software, firmware, middleware, microcode, a hardware description language, or another name, software should be interpreted broadly to mean instructions, instruction sets, codes, code segments, program codes, a program, a sub-program, a software module, an application, a software application, a software package, a routine, a subroutine, an object, an executable file, an execution thread, a procedure, a function, and the like.

Also, software, instructions, information, or the like may be transmitted and received through transmission media. For example, in a case where software is transmitted from a website, a server or another remote source through at least one of wired technology (such as a coaxial cable, an optical-fiber cable, a twisted pair, or a digital subscriber line (DSL)) and radio technology (such as infrared or microwaves), at least one of the wired technology and the radio technology is included in the definition of a transmission medium.

Information, signals, and the like described in the present disclosure may be expressed with the use of any one of various different technologies. For example, data, instructions, commands, information, signals, bits, symbols, chips, and the like mentioned herein throughout the above explanation may be expressed by voltages, currents, electromagnetic waves, magnetic fields or magnetic particles, optical fields or photons, or any combinations thereof.

The terms described in the present disclosure and the terms necessary for understanding the present disclosure may be replaced with terms having the same or similar meanings . For example, at least one of a channel and a symbol may be a signal (signaling). A signal may be a message. A component carrier (CC) may be referred to as a carrier frequency, a cell, a frequency carrier, or the like.

The terms "system" and "network" used in the present disclosure are used interchangeably.

Also, information, parameters, and the like described in the present disclosure may be expressed by absolute values, may be expressed by relative values with respect to predetermined values, and may be expressed by corresponding different information. For example, radio resources may be indicated by indices.

The above-described names used for the parameters are not restrictive in any respect. In addition, formulas or the like using these parameters may be different from those explicitly disclosed in the present disclosure. Various channels (for example, a PUCCH, a PDCCH, and the like) and information elements can be identified by any suitable names, and therefore, various names given to these various channels and information elements are not restrictive in any respect.

In the present disclosure, terms such as "base station (BS)", "radio base station", "base station apparatus", "fixed station", "NodeB", "eNodeB (eNB)", "gNodeB (gNB)", "access point", "transmission point", "reception point", "transmission/reception point", "cell", "sector", "cell group", "carrier", "component carrier", and the like may be used interchangeably. A base station may be referred to as a macro-cell, a small cell, a femtocell, a pico-cell, or the like.

A base station can accommodate one or a plurality of (for example, three) cells. In a case where a base station accommodates a plurality of cells, the whole coverage area of the base station can be divided into a plurality of smaller areas. For each smaller area, a base station subsystem (for example, an indoor miniature base station RRH (Remote Radio Head)) can provide a communication service. The term "cell" or "sector" denotes all or a part of the coverage area of at least one of a base station and a base station subsystem that provides communication services in the coverage.

In the present disclosure, terms such as "mobile station (MS)", "user terminal", "user equipment (UE)", and "terminal" may be used interchangeably.

By the person skilled in the art, a mobile station may be referred to as any one of a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, and other suitable terms.

At least one of a base station and a mobile station may be referred to as a transmitting apparatus, a receiving apparatus, a communication device, or the like. At least one of a base station and a mobile station may be an apparatus mounted on a mobile body, or may be a mobile body itself, or the like. A mobile body may be a transporting device (e.g., a vehicle, an airplane, and the like), an unmanned mobile (e.g., a drone, an automated vehicle, and the like), or a robot (of a manned or unmanned type). It is noted that at least one of a base station and a mobile station includes an apparatus that does not necessarily move during a communication operation. For example, at least one of a base station and a mobile station may be an IoT (Internet of Things) device such as a sensor.

In addition, a base station according to the present disclosure may be read as a user terminal. For example, each aspect or embodiment of the present disclosure may be applied to a configuration in which communication between a base station and a user terminal is replaced by communication between a plurality of user equipments 20 (that may be called D2D (Device-to-Device), V2X (Vehicle-to-Everything), or the like). In this case, a user equipment 20 may have above-described functions of the base station apparatus 10. In this regard, a word such as "up" or "down" may be replaced with a word corresponding to communication between terminals (for example, "side"). For example, an uplink channel, a downlink channel, or the like may be replaced with a side channel.

Similarly, a user terminal according to the present disclosure may be read as a base station. In this case, a base station may have above-described functions of the user terminal.

The term "determining" used herein may mean various operations. For example, judging, calculating, computing, processing, deriving, investigating, looking up, searching, inquiring (for example, looking up a table, a database, or another data structure), ascertaining, or the like may be deemed as making determination. Also, receiving (for example, receiving information), transmitting (for example, transmitting information), inputting, outputting, or accessing (for example, accessing data in a memory), or the like may be deemed as making determination. Also, resolving, selecting, choosing, establishing, comparing, or the like may be deemed as making determination. That is, doing a certain operation may be deemed as making determination. "Determining" may be read as "assuming", "expecting", "considering", or the like.

Each of the terms "connected" and "coupled" and any variations thereof mean any connection or coupling among two or more elements directly or indirectly and can mean that one or a plurality of intermediate elements are inserted among two or more elements that are "connected" or "coupled" together. Coupling or connecting among elements may be physical one, may be logical one, and may be a combination thereof. For example, "connecting" may be read as "accessing". In a case where the terms "connected" and "coupled" and any variations thereof are used in the present disclosure, it may be considered that two elements are "connected" or "coupled" together with the use of at least one type of a medium from among one or a plurality of wires, cables, and printed conductive traces, and in addition, as some non-limiting and non-inclusive examples, it may be considered that two elements are "connected" or "coupled" together with the use of electromagnetic energy such as electromagnetic energy having a wavelength of the radio frequency range, the microwave range, or the light range (including both of the visible light range and the invisible light range).

A reference signal can be abbreviated as an RS (Reference Signal). A reference signal may be referred to as a pilot depending on an applied standard.

A term "based on" used in the present disclosure does not mean "based on only" unless otherwise specifically noted. In other words, a term "base on" means both "based on only" and "based on at least".

Any references to elements denoted by a name including terms such as "first" or "second" used in the present disclosure do not generally limit the amount or the order of these elements. These terms can be used in the present disclosure as a convenient method for distinguishing one or a plurality of elements. Therefore, references to first and second elements do not mean that only the two elements can be employed or that the first element should be, in some way, prior to the second element.

"Means" in each of the above-described apparatuses may be replaced with "unit", "circuit", "device", or the like.

In a case where any one of "include", "including", and variations thereof is used in the present disclosure, each of these terms is intended to be inclusive in the same way as the term "comprising". Further, the term "or" used in the present disclosure is intended to be not exclusive-or.

A radio frame may include, in terms of time domain, one or a plurality of frames. Each of one or a plurality of frames may be referred to as a subframe in terms of time domain. A subframe may include, in terms of time domain, one or a plurality of slots. A subframe may have a fixed time length (e.g., 1 ms) independent of numerology.

The numerology may be a communication parameter that is applied to at least one of transmission and reception of a signal or a channel. The numerology may mean, for example, at least one of a subcarrier spacing (SCS), a bandwidth, a symbol length, a cyclic prefix length, a transmission time interval (TTI), the number of symbols per TTI, a radio frame configuration, a specific filtering processing performed by a transceiver in a frequency domain, a specific windowing processing performed by a transceiver in a time domain, and the like.

A slot may include, in terms of time domain, one or a plurality of symbols (OFDM (Orthogonal Frequency Division Multiplexing) symbols, SC-FDMA (Single Carrier Frequency Division Multiplexing) symbols) symbols, or the like). A slot may be a time unit based on the numerology.

A slot may include a plurality of minislots. Each minislot may include one or a plurality of symbols in terms of the time domain. A minislot may also be referred to as a subslot. A minislot may include fewer symbols than a slot. A PDSCH (or PUSCH) transmitted at a time unit greater than a minislot may be referred to as a PDSCH (or PUSCH) mapping type A. A PDSCH (or PUSCH) transmitted using minislots may be referred to as a PDSCH (or PUSCH) mapping type B.

Each of a radio frame, a subframe, a slot, a minislot, and a symbol means a time unit for transmitting a signal. Each of a radio frame, a subframe, a slot, a minislot, and a symbol may be referred to as other names respectively corresponding thereto.

For example, one subframe may be referred to as a transmission time interval (TTI), a plurality of consecutive subframes may be referred to as a TTI, and one slot or one minislot may be referred to as a TTI. That is, at least one of a subframe and a TTI may be a subframe (1 ms) according to the existing LTE, may have a period shorter than 1 ms (e.g., 1 to 13 symbols), and may have a period longer than 1 ms. Instead of subframes, units expressing a TTI may be referred to as slots, minislots, or the like.

A TTI means, for example, a minimum time unit of scheduling in radio communication. For example, in an LTE system, a base station performs scheduling for each user equipment 20 to allocate, in TTI units, radio resources (such as frequency bandwidths, transmission power, and the like that can be used by each user equipment 20). However, the definition of a TTI is not limited thereto.

A TTI may be a transmission time unit for channel-coded data packets (transport blocks), code blocks, code words, or the like, and may be a unit of processing such as scheduling, link adaptation, or the like. When a TTI is given, an actual time interval (e.g., the number of symbols) to which transport blocks, code blocks, code words, or the like are mapped may be shorter than the given TTI.

In a case where one slot or one minislot is referred to as a TTI, one or a plurality of TTIs (i.e., one or a plurality of slots or one or a plurality of minislots) may be a minimum time unit of scheduling. The number of slots (the number of minislots) included in the minimum time unit of scheduling may be controlled.

A TTI having a time length of 1 ms may referred to as an ordinary TTI (a TTI according to LTE Rel.8-12), a normal TTI, a long TTI, an ordinary subframe, a normal subframe, a long subframe, a slot, or the like. A TTI shorter than an ordinary TTI may be referred to as a shortened TTI, a short TTI, a partial or fractional TTI, a shortened subframe, a short subframe, a minislot, a subslot, a slot, or the like.

Note that a long TTI (for example, a normal TTI, a subframe, and the like) may be read as TTI having a time length exceeding 1 ms, and a short TTI (for example, a shortened TTI) may be read as a TTI having a TTI length less than the TTI length of the long TTI and equal to or more than 1 ms.

A resource block (RB) is a resource allocation unit in terms of a time domain and a frequency domain and may include one or a plurality of consecutive subcarriers in terms of frequency domain. The number of subcarriers included in an RB may be the same regardless of the numerology, and, for example, may be 12. The number of subcarriers included in a RB may be determined based on the numerology.

Also, in terms of the time domain, an RB may include one or a plurality of symbols, and may have a length of 1 minislot, 1 subframe, or 1 TTI. Each of 1 TTI, 1 subframe, and the like may include one or a plurality of resource blocks.

One or a plurality of RBs may be referred to as physical resource blocks (PRBs: Physical RBs), a subcarrier group (SCG: Sub-Carrier Group), a resource element group (REG: Resource Element Group), a PRB pair, an RB pair, or the like.

Also, a resource block may include one or a plurality of resource elements (RE: Resource Elements). For example, 1 RE may be a radio resource area of 1 subcarrier and 1 symbol.

A bandwidth part (BWP) (which may be called a partial bandwidth or the like) may mean a subset of consecutive common RBs (common resource blocks) for certain numerology, in any given carrier. A common RB may be identified by a RB index with respect to a common reference point in the carrier. PRBs may be defined by a BWP and may be numbered in the BWP.

A BWP may include a BWP (UL BWP) for UL and a BWP (DL BWP) for DL. For a UE, one or a plurality of BWPs may be set in 1 carrier.

At least one of configured BWPs may be active, and a UE need not assume sending or receiving a predetermined signal or channel outside the active BWP. A "cell", a "carrier" or the like in the present disclosure may be read as a "BWP".

The above-described structures of radio frames, subframes, slots, minislots, symbols, and the like are merely examples. For example, the number of subframes included in a radio frame, the number of slots included in a subframe or a radio frame, the number of minislots included in a slot, the number of symbols and the number of RBs included in a slot or a minislot, the number of subcarriers included in an RB, the number of symbols included in a TTI, a symbol length, a cyclic prefix (CP) length, and the like can be variously changed.

Throughout the present disclosure, in a case where an article such as "a", "an", or "the" in English is added through a translation, the present disclosure may include a case where a noun following the article is of a plural form.

Throughout the present disclosure, an expression that "A and B are different" may mean that "A and B are different from each other". Also, this term may mean that "each of A and B is different from C". Terms such as "separate" and "coupled" may also be interpreted in a manner similar to "different".

Each aspect or embodiment described in the present disclosure may be solely used, may be used in combination with another embodiment, and may be used in a manner of being switched with another embodiment upon implementation. Notification of predetermined information (for example, notification of "being x") may be implemented not only explicitly but also implicitly (for example, by not notifying predetermined information).

Note that a PSFCH occasion of the present disclosure is one example of an occasion for transmitting and receiving an HARQ acknowledgment.

Although the present disclosure has been described above, it will be understood by those skilled in the art that the present disclosure is not limited to the embodiment described in the present disclosure. Modifications and changes of the present disclosure may be possible without departing from the subject matter and the scope of the present disclosure defined by claims. Therefore, the descriptions of the present disclosure are for illustrative purposes only, and are not intended to be limiting the present disclosure in any way.

### LIST OF REFERENCE SYMBOLS

- 10: Base station
- 110: Transmission unit
- 120: Reception unit
- 130: Configuration unit
- 140: Control unit
- 20: Terminal
- 210: Transmission unit
- 220: Reception unit
- 230: Configuration unit
- 240: Control unit
- 30: GNSS
- 1001: Processor
- 1002: Memory
- 1003: Storage
- 1004: Communication device
- 1005: Input device
- 1006: Output device

## Claims

1. A terminal, comprising:
a control unit configured to, in a case where multiple first channels for transmission to a base station overlap with a second channel for transmission to another terminal in a time domain, determine an operation to be applied to the multiple first channels and the second channel; and
a transmission unit configured to apply the operation to transmit the channel,
wherein the control unit determines which of a first operation or a second operation is to be performed first, the first operation being applied to the multiple first channels and the second operation being applied to at least one of the second channel and the multiple first channels.

2. The terminal as claimed in claim 1, wherein the first operation is an operation of multiplexing or stopping transmission, and the second operation is an operation of stopping transmission of an un-prioritized channel or of decreasing transmission power.

3. The terminal as claimed in claim 2, wherein the control unit first performs the first operation in a case where multiple overlaps among the multiple first channels arise and first performs the second operation in a case where the multiple overlaps among the multiple first channels do not arise.

4. The terminal as claimed in claim 2, wherein the control unit first performs the second operation in a case where the second channel does not include an occasion for transmission and reception of an HARQ (Hybrid Automatic Repeat Request) response and first performs the first operation in a case where the second channel includes the occasion for transmission and reception of an HARQ response.

5. The terminal as claimed in claim 2, wherein the control unit first performs the second operation in a case where the base station allocates a resource of the second channel and first performs the first operation in a case where the terminal selects a resource of the second channel.

6. A communication method implemented by a terminal, comprising:
in a case where multiple first channels for transmission to a base station overlap with a second channel for transmission to another terminal in a time domain, determining an operation to be applied to the multiple first channels and the second channel; and
applying the operation to transmit a channel,
wherein the determining includes determining which of a first operation or a second operation is to be performed first, the first operation being applied to the multiple first channels and the second operation being applied to at least one of the second channel and the multiple first channels.
